(19) Europäisches Patentamt / European Patent Office / Office européen des brevets

(11) **EP 4 517 376 A1**

(12) **EUROPEAN PATENT APPLICATION**
published in accordance with Art. 153(4) EPC

(43) Date of publication:
05.03.2025 Bulletin 2025/10

(21) Application number: 22943162.2

(22) Date of filing: 26.05.2022

(51) International Patent Classification (IPC):
*G01S 11/02* (2010.01)

(52) Cooperative Patent Classification (CPC):
G01S 11/02

(86) International application number:
PCT/CN2022/095359

(87) International publication number:
WO 2023/225962 (30.11.2023 Gazette 2023/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• GAO, Lei
  Shenzhen, Guangdong 518129 (CN)
• LI, Dejian
  Shenzhen, Guangdong 518129 (CN)
• CHENG, Xingqing
  Shenzhen, Guangdong 518129 (CN)

(74) Representative: Huawei European IPR
Huawei Technologies Duesseldorf GmbH
Riesstraße 25
80992 München (DE)

(54) **DISTANCE MEASUREMENT METHOD AND RELATED APPARATUS**

(57) This application discloses a ranging method and a related apparatus, and relates to the field of communication technologies. The ranging method includes: A first device sends a first measurement frame to a second device on a first frequency (S301), and receives, on the first frequency, a second measurement frame sent by the second device (S302); the first device sends a third measurement frame to the second device on a second frequency (S303), and receives, on the second frequency, a fourth measurement frame sent by the second device (S304), where the second frequency is different from the first frequency; and the first device obtains a first measurement result based on the second measurement frame (S305); the first device obtains a third measurement result based on the fourth measurement frame (S306); and the first device sends the first measurement result and the third measurement result to a third device (S307). In this method, a joint measurement result of the first frequency and a joint measurement result of the second frequency are not affected by a random initial phase caused by frequency switching of a device, and may be coherently combined, so that a bandwidth greater than a bandwidth of a measurement frame of a single frequency can be used to calculate a ranging result, and ranging accuracy is improved.

FIG. 3

**Description**

**TECHNICAL FIELD**

This application relates to the field of communication technologies, and in particular, to a ranging method and a related apparatus.

**BACKGROUND**

A manner in which a communication device transmits a ranging signal to implement ranging is an important means for resolving a ranging/positioning problem. Ranging accuracy is closely related to a bandwidth covered by ranging signals that can be coherently combined. A wider bandwidth covered by the ranging signals indicates higher ranging accuracy.

Currently, a type of communication device performs communication in a frequency hopping manner in consideration of factors such as costs, power consumption, and anti-interference, that is, performs communication in a manner in which a narrow bandwidth is occupied for each transmission, and frequency hopping is performed in a large bandwidth range for a plurality of transmissions.

It is difficult to obtain high accuracy when ranging is performed in the foregoing ranging manner. Because frequency hopping causes a random initial phase of a device clock, ranging signals transmitted on different frequencies cannot be directly coherently combined, and it is difficult to implement high ranging accuracy. In addition, in consideration of factors such as costs and power consumption, the communication device generally has low clock accuracy, and non-ideal timing and a non-ideal frequency of the device clock also cause a decrease in ranging accuracy. How to suppress impact of non-ideality of the device clock, such as a timing offset, a frequency offset, and a frequency drifted with time, on a ranging result is also an important problem in the current research.

In conclusion, how to implement ranging via the communication device and improve ranging accuracy becomes an urgent problem to be resolved.

**SUMMARY**

Embodiments of this application provide a ranging method and a related apparatus, to reduce a ranging error and improve ranging accuracy.

According to a first aspect, an embodiment of this application provides a ranging method. The method includes:

A first device sends a first measurement frame to a second device on a first frequency, and receives, on the first frequency, a second measurement frame sent by the second device;

the first device sends a third measurement frame to the second device on a second frequency, and receives, on the second frequency, a fourth measurement frame sent by the second device, where the second frequency is different from the first frequency;

the first device obtains a first measurement result based on the second measurement frame;

the first device obtains a third measurement result based on the fourth measurement frame; and

the first device sends the first measurement result and the third measurement result to a third device, where the first measurement result and the third measurement result are used for ranging.

In this embodiment of this application, the ranging method is provided. The first device and the second device exchange measurement frames on at least two frequencies. For example, the first device sends the first measurement frame to the second device on the first frequency and receives the second measurement frame from the second device on the first frequency, and sends the third measurement frame to the second device on the second frequency and receives the fourth measurement frame from the second device on the second frequency. The second frequency is different from the first frequency, the first measurement frame and the third measurement frame are used by the second device to obtain a second measurement result and a fourth measurement result, respectively. The first device obtains the first measurement result based on the received second measurement frame, obtains the third measurement result based on the received fourth measurement frame, and sends the first measurement result and the third measurement result to the third device. A computing device for calculating a ranging result calculates the ranging result based on the first measurement result, the second measurement result, the third measurement result, and the fourth measurement result. The third device may be the second device, or may be a device other than the second device. This is not limited in this application. The third device is the computing device, and is configured to calculate the ranging result; or the third device is a forwarding device, and is configured to forward the first measurement result and the third measurement result to the computing device. This is not limited in this application. The first device and the second device generate random initial phases when switching from the first frequency to the second frequency. As a result, the first measurement result and the third measurement result cannot be directly coherently combined, and the second measurement result and the fourth measurement result cannot be directly coherently combined. A joint measurement result of the first frequency is obtained by combining the first measurement result and the second measurement result, and the joint measurement result of the first frequency is not affected by initial phases of the first device and the second device on the first frequency. A joint measurement result of the second frequency is obtained by combining the third measurement result and the fourth measurement result, and the joint measurement result of the second frequency is not affected by initial phases of the first device and the second device on the second frequency. Therefore, the joint measurement result of the first frequency and the joint measurement result of the second frequency are not affected by the random initial phase caused by frequency switching of the device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In this embodiment of this application, a possible specific implementation of obtaining the first frequency and the second frequency is provided. Specifically, the first frequency and the second frequency are the two adjacent frequencies in the time order of use. To be specific, the first device and the second device first exchange measurement frames on the first frequency, then exchange measurement frames on the second frequency, and in time between the two measurement frame exchanges, do not exchange measurement frames on a frequency other than the first frequency and the second frequency. It should be understood that use herein means that the first device and the second device exchange measurement frames, and that the first frequency and the second frequency are adjacent in the time order of use does not exclude a case in which the first device and the second device exchange non-measurement frames on another frequency in the time between the foregoing two measurement frame exchanges, for example, exchange a frame that is used to transmit service data, a measurement result, signaling, or the like but is not used for ranging measurement. Herein, a case in which devices other than the first device and the second device exchange any type of frame on any frequency in the time between the foregoing two measurement frame exchanges is not excluded. The first frequency is obtained from the first frequency set, and then the second frequency is obtained from the second frequency set. A difference between the first frequency set and the second frequency set is that the first frequency set includes the first frequency, and the second frequency set does not include the first frequency. It may be understood that the second frequency set is a frequency set obtained after the first frequency is removed from the first frequency set. According to this embodiment of this application, the first frequency and the second frequency are the two adjacent frequencies in the time order of use, so that a same frequency can be avoided from being repeatedly used during measurement, thereby shortening measurement time for ranging. If there is a relative movement between the first device and the second device, shortening the measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the measurement time for ranging can reduce a range of the device clock frequency drift during measurement, suppress impact of the clock drift on the ranging result, and improve ranging accuracy.

In a possible implementation, the method further includes:

The first device determines the first frequency in the first frequency set in a pseudo-random manner based on a first random seed; and

the first device determines the second frequency in the second frequency set in a pseudo-random manner based on a second random seed.

In this embodiment of this application, a possible specific implementation of determining the first frequency and the second frequency is provided. Specifically, a used frequency is determined in a corresponding frequency set in a pseudo-random manner based on a random seed, and the first random seed used for determining the first frequency and the second random seed used for determining the second frequency may be a same random seed, or may be different random seeds. According to this embodiment of this application, the frequency is determined in the pseudo-random manner based on the random seed, so that the determined frequency is random, thereby reducing a probability that mutual interference is caused when a same time-frequency resource is used when a spectrum is shared with another device, and improving ranging performance.

In a possible implementation, the method further includes:

The first device generates and sends the first random seed and/or the second random seed; or

the first device receives the first random seed and/or the second random seed.

In this embodiment of this application, several possible specific implementations of obtaining the first random seed and/or the second random seed are provided. Details are as follows: 1. The first device generates the first random seed and/or the second random seed and sends the first random seed and/or the second random seed to the second device; 2. The first device generates the first random seed and/or the second random seed and sends the first random seed and/or the second random seed to another device, and then the another device forwards the first random seed and/or the second random seed to the second device; 3. The first device receives the first random seed and/or the second random seed from the second device; 4. The first device receives the first random seed and/or the second random seed from another device, where before that, the first random seed and/or the second random seed of the another device are/is generated by the second device and sent to the another device; and 5. Another device generates the first random seed and/or the second random seed, and sends the first random seed and/or the second random seed to the first device and the second device. In any one of the foregoing manners, the first device and the second device use a same first random seed when selecting the first frequency, and use a same second random seed when selecting the second frequency. Therefore, the first device and the second device select a same first frequency and a same second frequency, to avoid a frequency selection error.

In a possible implementation, the first measurement result includes phase information or in-phase component and quadrature component IQ information of a single-frequency sine wave signal included in the second measurement frame at a first moment, or phase information or IQ information, at the first moment, of a signal obtained by extending the single-frequency sine wave signal included in the second measurement frame according to a single-frequency sine wave model.

In this embodiment of this application, a possible specific implementation of obtaining the first measurement result is provided. Specifically, the first device measures the second measurement frame, to obtain the first measurement result, where the first measurement result includes the phase information or the in-phase component and quadrature component IQ information of the single-frequency sine wave signal included in the second measurement frame at the first moment; or the first measurement result includes the phase information or the in-phase component and quadrature component IQ information, at the first moment, of the signal obtained by extending the single-frequency sine wave signal included in the second measurement frame according to the single-frequency sine wave model. The ranging method based on the phase information or the IQ information including the phase information can obtain higher ranging accuracy than a conventional amplitude-based ranging method.

In a possible implementation, the method further includes:

The first device determines a first timing offset, where the first timing offset represents a timing offset of the first device relative to the second measurement frame; and

the first device determines the first moment based on the first timing offset.

In this embodiment of this application, a possible specific implementation of determining the first moment is provided. Specifically, the first device determines the first timing offset, and determines the first moment based on the first timing offset, where the first timing offset represents the timing offset of the first device relative to the second measurement frame. According to this embodiment of this application, a moment corresponding to the phase information or the IQ information is corrected based on the measured timing offset, so that impact of timing and frequency differences between a first device clock and a second device clock on the ranging result can be suppressed, and ranging accuracy can be improved.

In a possible implementation, the first moment satisfies $T1=t0+t1/2$, where t0 represents a reference moment, t1 represents the first timing offset, and T1 represents the first moment.

In this embodiment of this application, a possible specific implementation of determining the first moment is provided. Specifically, the first moment needs to satisfy $t0+t1/2$, where t0 represents the reference moment, and t1 represents the first timing offset. Correspondingly, the second device also determines a second moment by using a similar method. A difference between real time corresponding to the first moment of the first device clock and real time corresponding to the second moment of the second device clock is mainly related to a measurement error between the first timing offset and a second timing offset, and is irrelevant to a timing offset between the first device clock and the second device clock. The joint measurement result of the first frequency obtained by combining the first measurement result and the second measurement result is not affected by the timing offset between the first device clock and the second device clock, so that impact of the timing offset between the first device clock and the second device clock on the ranging result is suppressed, and ranging accuracy is improved.

In a possible implementation, the determining a first timing offset includes:

The first device determines the first timing offset by measuring a signal in the second measurement frame.

In this embodiment of this application, a possible specific implementation of determining the first timing offset is provided. Specifically, the first device determines the first timing offset by measuring the signal in the second measurement frame, or the first device may determine the first timing offset by measuring another signal sent by the second device, where the another signal may include a signal in another measurement frame or a signal in another non-measurement frame. Based on the first timing offset determined in this embodiment of this application, the timing offset can be corrected, the timing and frequency differences between the first device clock and the second device clock are reduced, and impact on the measurement result of the measurement frame is reduced, thereby reducing an error of the ranging result and improving ranging accuracy.

In a possible implementation, the method further includes:

The first device receives a first message, and/or sends the first message, where the first message indicates the reference moment, or

the reference moment is a preconfigured or predefined moment.

In this embodiment of this application, several possible specific implementations of determining the reference moment are provided. Specifically, the first device receives the first message and/or sends the first message, and determines the reference moment via information indicated by the first message, or the reference moment is a moment preconfigured for the first device (and the second device) or a moment predefined in a protocol. According to this embodiment of this application, the first device and the second device determine measurement moments by using a same agreed reference moment, so that impact of the timing and frequency differences between the first device clock and the second device clock on the measurement result of the measurement frame can be suppressed, thereby reducing the error of the ranging result and improving ranging accuracy.

In a possible implementation, the method further includes:

The first device receives a second message, and/or sends the second message, where the second message indicates a reference value, or the reference value is a preconfigured or predefined value; and

determines the reference moment based on the reference value and a first frequency offset, where the first frequency offset represents a frequency offset of the first device relative to the second measurement frame.

In this embodiment of this application, several possible specific implementations of determining the reference moment are provided. Specifically, the first device receives the second message and/or sends the second message, and determines the reference moment based on the first frequency offset and the reference value indicated by the second message, where the first frequency offset represents the frequency offset of the first device relative to the second measurement frame. According to this embodiment of this application, the first device and the second device use a same agreed reference value, and the first device determines the reference moment based on the frequency offset and the reference value, to correct impact of a change of a timing offset caused by the frequency offset with time on the reference moment. Therefore, the measurement moment is determined based on the reference moment, so that impact of the timing and frequency differences between the first device clock and the second device clock on the measurement result of the measurement frame can be suppressed, thereby reducing the error of the ranging result and improving ranging accuracy.

In a possible implementation, reference moments corresponding to different frequencies are the same or different, and/or reference values corresponding to different frequencies are the same or different.

In a possible implementation, when the first device and/or the second device use/uses a plurality of antennas, reference moments used by different antenna combinations of a same frequency are the same or different, and/or reference values used by different antenna combinations of a same frequency are the same or different.

The different antenna combinations include but are not limited to an antenna combination 1 (a transmit antenna 1 of the first device and a receive antenna 2 of the second device), an antenna combination 2 (a receive antenna 1 of the first device and a transmit antenna 2 of the second device), and/or the like. This is not limited in embodiments of this application.

In a possible implementation, the first measurement frame neither includes measurement result data nor includes service data.

According to this embodiment of this application, a time length of a signal used for measurement in the first measurement frame, for example, a length of the single-frequency sine wave signal, can be shortened or increased. The length of the measurement frame is shortened, so that an interval at which the single-frequency sine wave signal is transmitted between the first device and the second device and total measurement time for ranging can be shortened. In consideration of non-ideality of a clock, a ranging result error caused by the clock frequency offset between the first device and the second device is related to the interval at which the single-frequency sine wave signal is transmitted between the first device and the second device. With a same frequency offset, a larger interval indicates a larger error. The interval at which the single-frequency sine wave signal is transmitted between the first device and the second device is shortened, so that impact of the clock frequency offset between the first device and the second device on the ranging result can be suppressed. If there is a relative movement between the first device and the second device, shortening the total measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the total measurement time for ranging can reduce a range of the device clock frequency drift during measurement, suppress impact of the clock drift on the ranging result, and improve ranging accuracy. Increasing the time length of the signal used for measurement in the first measurement frame can improve accuracy of obtaining the second measurement result by the second device based on the first measurement frame, thereby improving ranging accuracy.

In a possible implementation, a single-frequency sine wave signal included in the first measurement frame includes at least two symbols, each of the at least two symbols is obtained through modulation based on a first sequence by using a first constellation diagram, the first sequence is a sequence including N bits, and a value of N corresponds to a modulation scheme of the first constellation diagram.

In this embodiment of this application, a possible specific implementation of obtaining the first measurement frame is provided. Specifically, the single-frequency sine wave signal included in the first measurement frame includes the at least two symbols, and each of the at least two symbols is obtained through modulation based on the first sequence by using the first constellation diagram. The first sequence is a sequence including the N bits, and the value of N corresponds to the modulation scheme of the first constellation diagram. For example, a value of N corresponding to a binary phase shift keying BPSK modulation scheme is 1, a value of N corresponding to a quadrature phase shift keying QPSK modulation scheme is 2, and a value of N corresponding to an 8 phase shift keying 8PSK modulation scheme is 3. In this embodiment of this application, a same modulation scheme is used for the single-frequency sine wave signal in the first measurement frame and another signal, to avoid extra implementation complexity and extra time overheads caused by modulation scheme switching, so as to shorten or increase a time length of a signal used for measurement in the first measurement frame, for example, a length of the single-frequency sine wave signal. The length of the measurement frame is shortened, so that an interval at which the single-frequency sine wave signal is transmitted between the first device and the second device and total measurement time for ranging can be shortened. In consideration of non-ideality of a clock, a ranging result error caused by the clock frequency offset between the first device and the second device is related to the interval at which the single-frequency sine wave signal is transmitted between the first device and the second device. With a same frequency offset, a larger interval indicates a larger error. The interval at which the single-frequency sine wave signal is transmitted between the first device and the second device is shortened, so that impact of the clock frequency offset between the first device and the second device on the ranging result can be suppressed. If there is a relative movement between the first device and the second device, shortening the total measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the total measurement time for ranging can reduce a range of the device clock frequency drift during measurement, suppress impact of the clock drift on the ranging result, and improve ranging accuracy. Increasing the time length of the signal used for measurement in the first measurement frame can improve accuracy of obtaining the second measurement result by the second device based on the first measurement frame, thereby improving ranging accuracy.

In a possible implementation, a first symbol is obtained through modulation based on the first sequence by using the first constellation diagram.

The first symbol includes a symbol that is located before and adjacent to the single-frequency sine wave signal and that is in the first measurement frame, and/or a 1st symbol that is located after the single-frequency sine wave signal and that is in the first measurement frame.

In this embodiment of this application, a possible specific implementation of obtaining the first measurement frame is provided. Specifically, like the at least two symbols included in the single-frequency sine wave signal in the first measurement frame, the first symbol included in the first measurement frame is obtained through modulation based on the first sequence by using the first constellation diagram. The first symbol includes the symbol that is located before and adjacent to the single-frequency sine wave signal and that is in the first measurement frame, and/or the 1st symbol that is located after the single-frequency sine wave signal and that is in the first measurement frame. According to this embodiment of this application, the single-frequency sine wave signal and adjacent symbols on two sides of a boundary of the single-frequency sine wave signal have a same mapping sequence, and use a same constellation diagram, so that the measurement frame can be prevented from suddenly changing at the boundary, thereby suppressing signal distortion caused by the boundary, improving accuracy of the measurement result of the measurement frame, and improving ranging accuracy.

In a possible implementation, a single-frequency sine wave signal included in the first measurement frame includes at least two symbols, and each of the at least two symbols is obtained through Gaussian frequency-shift keying GFSK modulation based on a first bit.

A second symbol is obtained through GFSK modulation based on the first bit.

The second symbol includes a symbol that is located before and adjacent to the single-frequency sine wave signal and that is in the first measurement frame, and/or a 1st symbol that is located after the single-frequency sine wave signal and that is in the first measurement frame.

In this embodiment of this application, a possible specific implementation of obtaining the first measurement frame is provided. Specifically, the single-frequency sine wave signal included in the first measurement frame includes the at least two symbols, and each of the at least two symbols is obtained through Gaussian frequency-shift keying GFSK modulation based on the first bit. Like the at least two symbols included in the single-frequency sine wave signal in the first measurement frame, the second symbol included in the first measurement frame is also obtained through Gaussian frequency-shift keying GFSK modulation based on the first bit. The second symbol includes the symbol that is located before and adjacent to the single-frequency sine wave signal and that is in the first measurement frame, and/or the 1st symbol that is located after the single-frequency sine wave signal and that is in the first measurement frame. According to this embodiment of this application, the single-frequency sine wave signal and adjacent symbols on two sides of a boundary of the single-frequency sine wave signal have a same mapping bit, and use a same modulation scheme, so that the measurement frame can be prevented from suddenly changing at the boundary, thereby suppressing signal distortion caused by the boundary, improving accuracy of the measurement result of the measurement frame, and improving ranging accuracy.

In a possible implementation, the method further includes:

The first device receives the ranging result, where the ranging result includes information about a distance between the first device and the second device.

In this embodiment of this application, a possible specific implementation of ranging is provided. Specifically, that the first device receives the ranging result may be that the first device receives a ranging result sent by the third device. The third device may be the second device, and is configured to obtain the ranging result through calculation based on the received first measurement result, and send the ranging result to the first device. Alternatively, the third device may be another device having a ranging calculation capability, and send a ranging result obtained through calculation to the first device. The ranging result includes the information about the distance between the first device and the second device.

According to a second aspect, an embodiment of this application further provides a ranging method. The method includes:

A second device receives a first measurement frame sent by a first device on a first frequency, and sends a second measurement frame to the first device on the first frequency;

> the second device receives, on a second frequency, a third measurement frame sent by the first device, and sends a fourth measurement frame to the first device on the second frequency, where the second frequency is different from the first frequency;
> the second device obtains a second measurement result based on the first measurement frame;
> the second device obtains a fourth measurement result based on the third measurement frame;
> the second device receives a first measurement result and a third measurement result from a fourth device, where the first measurement result is a measurement result of the first device on the second measurement frame, and the third measurement result is a measurement result of the first device on the fourth measurement frame; and
> the second device determines a distance between the first device and the second device based on the first measurement result, the second measurement result, the third measurement result, and the fourth measurement result.

In this embodiment of this application, the ranging method is provided. The first device and the second device exchange measurement frames on at least two frequencies. For example, the second device receives the first measurement frame sent by the first device on the first frequency and sends the second measurement frame to the first device on the first frequency, and receives, on the second frequency, the third measurement frame sent by the first device and sends the fourth measurement frame to the first device on the second frequency. The second frequency is different from the first frequency, the second measurement frame and the fourth measurement frame are used by the first device to obtain the first measurement result and the third measurement result, respectively. The second device obtains the second measurement result based on the received first measurement frame, obtains the fourth measurement result based on the received third measurement frame, and receives the first measurement result and the third measurement result from the fourth device. The second device obtains a ranging result based on the first measurement result, the second measurement result, the third measurement result, and the fourth measurement result through calculation, and determines the distance between the first device and the second device. The fourth device may be the first device, or may be a device other than the first device. This is not limited in this application. The fourth device is the first device, and is configured to obtain the first measurement result and the third measurement result, and send the first measurement result and the third measurement result to the second device or a forwarding device; or the fourth device is the forwarding device, and is configured to forward the first measurement result and the third measurement result to the second device. This is not limited in this application. The first device and the second device generate random initial phases when switching from the first frequency to the second frequency. As a result, the first measurement result and the third measurement result cannot be directly coherently combined, and the second measurement result and the fourth measurement result cannot be directly coherently combined. A joint measurement result of the first frequency is obtained by combining the first measurement result and the second measurement result, and the joint measurement result of the first frequency is not affected by initial phases of the first device and the second device on the first frequency. A joint measurement result of the second frequency is obtained by combining the third measurement result and the fourth measurement result, and the joint measurement result of the second frequency is not affected by initial phases of the first device and the second device on the second frequency. Therefore, the joint measurement result of the first frequency and the joint measurement result of the second frequency are not affected by the random initial phase caused by frequency switching of the device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In this embodiment of this application, a possible specific implementation of obtaining the first frequency and the second frequency is provided. Specifically, the first frequency and the second frequency are the two adjacent frequencies in the time order of use. To be specific, the first device and the second device first exchange measurement frames on the first frequency, then exchange measurement frames on the second frequency, and in time between the two measurement frame exchanges, do not exchange measurement frames on a frequency other than the first frequency and the second frequency. It should be understood that use herein means that the first device and the second device exchange measurement frames, and that the first frequency and the second frequency are adjacent in the time order of use does not exclude a case in which the first device and the second device exchange non-measurement frames on another frequency in the time between the foregoing two measurement frame exchanges, for example, exchange a frame that is used to transmit service data, a measurement result, signaling, or the like but is not used for ranging measurement. Herein, a case in which devices other than the first device and the second device exchange any type of frame on any frequency in the time between the foregoing two measurement frame exchanges is not excluded. The first frequency is obtained from the first frequency set, and then the second frequency is obtained from the second frequency set. A difference between the first frequency set and the second frequency set is that the first frequency set includes the first frequency, and the second frequency set does not include the first frequency. It may be understood that the second frequency set is a frequency set obtained after the first frequency is removed from the first frequency set. According to this embodiment of this application, the first frequency and the second frequency are the two adjacent frequencies in the time order of use, so that a same frequency can be avoided from being repeatedly used during measurement, thereby shortening measurement time for ranging. If there is a relative movement between the first device and the second device, shortening the measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the measurement time for ranging can reduce a range of the device clock frequency drift during measurement, suppress impact of the clock drift on the ranging result, and improve ranging accuracy.

In a possible implementation, the method further includes:

The second device determines the first frequency in the first frequency set in a pseudo-random manner based on a first random seed; and

the second device determines the second frequency in the second frequency set in a pseudo-random manner based on a second random seed.

In this embodiment of this application, a possible specific implementation of determining the first frequency and the second frequency is provided. Specifically, a used frequency is determined in a corresponding frequency set in a pseudo-random manner based on a random seed, and the first random seed used for determining the first frequency and the second random seed used for determining the second frequency may be a same random seed, or may be different random seeds. According to this embodiment of this application, the frequency is determined in the pseudo-random manner based on the random seed, so that the determined frequency is random, thereby reducing a probability that mutual interference is caused when a same time-frequency resource is used when a spectrum is shared with another device, and improving ranging performance.

In a possible implementation, the method further includes:

The second device generates and sends the first random seed and/or the second random seed; or

the second device receives the first random seed and/or the second random seed.

In this embodiment of this application, several possible specific implementations of obtaining the first random seed and/or the second random seed are provided. Details are as follows: 1. The second device generates the first random seed and/or the second random seed and sends the first random seed and/or the second random seed to the first device; 2. The second device generates the first random seed and/or the second random seed and sends the first random seed and/or the second random seed to another device, and then the another device forwards the first random seed and/or the second random seed to the first device; 3. The second device receives the first random seed and/or the second random seed from the first device; 4. The second device receives the first random seed and/or the second random seed from another device, where before that, the first random seed and/or the second random seed of the another device are/is generated by the first device and sent to the another device; and 5. Another device generates the first random seed and/or the second random seed, and sends the first random seed and/or the second random seed to the first device and the second device. In any one of the foregoing manners, the first device and the second device use a same first random seed when selecting the first frequency, and use a same second random seed when selecting the second frequency. Therefore, the first device and the second device select a same first frequency and a same second frequency, to avoid a frequency selection error.

In a possible implementation, the method further includes:

The second device obtains the second measurement result based on the first measurement frame, where the second measurement result includes phase information or in-phase component and quadrature component IQ information of a single-frequency sine wave signal included in the first measurement frame at a second moment, or phase information or IQ information, at the second moment, of a signal obtained by extending a single-frequency sine wave signal included in the first measurement frame according to a single-frequency sine wave model, and the second measurement result is used for ranging.

In this embodiment of this application, a possible specific implementation of obtaining the second measurement result is provided. Specifically, the second device measures the first measurement frame, to obtain the second measurement result, where the second measurement result includes the phase information or the in-phase component and quadrature component IQ information of the single-frequency sine wave signal included in the first measurement frame at the second moment; or the second measurement result includes the phase information or the in-phase component and quadrature component IQ information, at the second moment, of the signal obtained by extending the single-frequency sine wave signal included in the first measurement frame according to the single-frequency sine wave model. The ranging method based on the phase information or the IQ information including the phase information can obtain higher ranging accuracy than a conventional amplitude-based ranging method.

In a possible implementation, the method further includes:

The second device determines a second timing offset, where the second timing offset represents a timing offset of the second device relative to the first measurement frame; and

the second device determines the second moment based on the second timing offset.

In this embodiment of this application, a possible specific implementation of determining the second moment is provided. Specifically, the second device determines the second timing offset, and determines the second moment based on the second timing offset, where the second timing offset represents the timing offset of the second device relative to the first measurement frame. According to this embodiment of this application, a moment corresponding to the phase information or the IQ information is corrected based on the measured timing offset, so that impact of timing and frequency differences between a first device clock and a second device clock on the ranging result can be suppressed, and ranging accuracy can be improved.

In a possible implementation, the second moment satisfies T2=t0+t2/2, where t0 represents a reference moment, t2 represents the second timing offset, and T2 represents the second moment.

In this embodiment of this application, a possible specific implementation of determining the second moment is provided. Specifically, the second moment needs to satisfy t0+t2/2, where t0 represents the reference moment, and t2 represents the second timing offset. Correspondingly, the first device also determines a first moment by using a similar method. A difference between real time corresponding to the first moment of the first device clock and real time corresponding to the second moment of the second device clock is mainly related to a measurement error between the first timing offset and the second timing offset, and is irrelevant to a timing offset between the first device clock and the second device clock. The joint measurement result of the first frequency obtained by combining the first measurement result and the second measurement result is not affected by the timing offset between the first device clock and the second device clock, so that impact of the timing offset between the first device clock and the second device clock on the ranging result is suppressed, and ranging accuracy is improved.

In a possible implementation, the determining a second timing offset includes:

The second device determines the second timing offset by measuring a signal in the first measurement frame.

In this embodiment of this application, a possible specific implementation of determining the second timing offset is provided. Specifically, the second device determines the second timing offset by measuring the signal in the first measurement frame, or the second device may determine the second timing offset by measuring another signal sent by the first device, where the another signal may include a signal in another measurement frame or a signal in another non-measurement frame. Based on the second timing offset determined in this embodiment of this application, the timing offset can be corrected, the timing and frequency differences between the first device clock and the second device clock are reduced, and impact on the measurement result of the measurement frame is reduced, thereby reducing an error of the ranging result and improving ranging accuracy.

In a possible implementation, the method further includes:

The second device sends a first message, and/or receives the first message, where the first message indicates the reference moment, or

the reference moment is a preconfigured or predefined moment.

In this embodiment of this application, several possible specific implementations of determining the reference moment are provided. Specifically, the second device receives the first message and/or sends the first message, and determines the reference moment via information indicated by the first message, or the reference moment is a moment preconfigured for the second device (and the first device) or a moment predefined in a protocol. According to this embodiment of this application, the first device and the second device determine measurement moments by using a same agreed reference moment, so that impact of the timing and frequency differences between the first device clock and the second device clock on the measurement result of the measurement frame can be suppressed, thereby reducing the error of the ranging result and improving ranging accuracy.

In a possible implementation, the method further includes:

The second device sends a second message, and/or receives the second message, where the second message indicates a reference value, or the reference value is a preconfigured or predefined value; and determines the reference moment based on the reference value and a second frequency offset, where the second frequency offset represents a frequency offset of the second device relative to the first measurement frame.

In this embodiment of this application, several possible specific implementations of determining the reference moment are provided. Specifically, the second device receives the second message and/or sends the second message, and determines the reference moment based on the second frequency offset and the reference value indicated by the second message, where the second frequency offset represents the frequency offset of the second device relative to the first measurement frame. According to this embodiment of this application, the first device and the second device use a same agreed reference value, and the second device determines the reference moment based on the frequency offset and the reference value, to correct impact of a change of a timing offset caused by the frequency offset with time on the reference moment. Therefore, the measurement moment is determined based on the reference moment, so that impact of the timing and frequency differences between the first device clock and the second device clock on the measurement result of the measurement frame can be suppressed, thereby reducing the error of the ranging result and improving ranging accuracy.

In a possible implementation, reference moments corresponding to different frequencies are the same or different, and/or reference values corresponding to different frequencies are the same or different.

In a possible implementation, when the first device and/or the second device use/uses a plurality of antennas, reference moments used by different antenna combinations of a same frequency are the same or different, and/or reference values used by different antenna combinations of a same frequency are the same or different.

The different antenna combinations include but are not limited to an antenna combination 1 (a transmit antenna 1 of the first device and a receive antenna 2 of the second device), an antenna combination 2 (a receive antenna 1 of the first device and a transmit antenna 2 of the second device), and/or the like. This is not limited in embodiments of this application.

In a possible implementation, a single-frequency sine wave signal included in the second measurement frame includes at least two symbols, each of the at least two symbols is obtained through modulation based on a second sequence by using a second constellation diagram, the second sequence is a sequence including M bits, and a value of M corresponds to a modulation scheme of the second constellation diagram.

In this embodiment of this application, a possible specific implementation of obtaining the second measurement frame is provided. Specifically, the single-frequency sine wave signal included in the second measurement frame includes the at least two symbols, and each of the at least two symbols is obtained through modulation based on the second sequence by using the second constellation diagram. The second sequence is a sequence including the M bits, and the value of M corresponds to the modulation scheme of the second constellation diagram. For example, a value of M corresponding to a binary phase shift keying BPSK modulation scheme is 1, a value of M corresponding to a quadrature phase shift keying QPSK modulation scheme is 2, and a value of M corresponding to an 8 phase shift keying 8PSK modulation scheme is 3. In this embodiment of this application, a same modulation scheme is used for the single-frequency sine wave signal in the second measurement frame and another signal, to avoid extra implementation complexity and extra time overheads caused by modulation scheme switching, so as to shorten or increase a time length of a signal used for measurement in the second measurement frame, for example, a length of the single-frequency sine wave signal. The length of the measurement frame is shortened, so that an interval at which the single-frequency sine wave signal is transmitted between the first device and the second device and total measurement time for ranging can be shortened. In consideration of non-ideality of a clock, a ranging result error caused by the clock frequency offset between the first device and the second device is related to the interval at which the single-frequency sine wave signal is transmitted between the first device and the second device. With a same frequency offset, a larger interval indicates a larger error. The interval at which the single-frequency sine wave signal is transmitted between the first device and the second device is shortened, so that impact of the clock frequency offset between the first device and the second device on the ranging result can be suppressed. If there is a relative movement between the first device and the second device, shortening the total measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the total measurement time for ranging can reduce a range of the device clock frequency drift during measurement, suppress impact of the clock drift on the ranging result, and improve ranging accuracy. Increasing the time length of the signal used for measurement in the second measurement frame can improve accuracy of obtaining the second measurement result by the second device based on the first measurement frame, thereby improving ranging accuracy.

In a possible implementation, a third symbol is obtained through modulation based on the second sequence by using the second constellation diagram.

The third symbol includes a symbol that is located before and adjacent to the single-frequency sine wave signal and that is in the second measurement frame, and/or a 1st symbol that is located after the single-frequency sine wave signal and that is in the second measurement frame.

In this embodiment of this application, a possible specific implementation of obtaining the second measurement frame is provided. Specifically, like the at least two symbols included in the single-frequency sine wave signal in the second measurement frame, the third symbol included in the second measurement frame is obtained through modulation based on the second sequence by using the second constellation diagram. The third symbol includes the symbol that is located before and adjacent to the single-frequency sine wave signal and that is in the second measurement frame, and/or the 1st symbol that is located after the single-frequency sine wave signal and that is in the second measurement frame. According to this embodiment of this application, the single-frequency sine wave signal and adjacent symbols on two sides of a boundary of the single-frequency sine wave signal have a same mapping sequence, and use a same constellation diagram, so that the measurement frame can be prevented from suddenly changing at the boundary, thereby suppressing signal distortion caused by the boundary, improving accuracy of the measurement result of the measurement frame, and improving ranging accuracy.

In a possible implementation, a single-frequency sine wave signal included in the second measurement frame includes at least two symbols, and each of the at least two symbols is obtained through Gaussian frequency-shift keying GFSK modulation based on a second bit.

A fourth symbol is obtained through GFSK modulation based on the second bit.

The fourth symbol includes a symbol that is located before and adjacent to the single-frequency sine wave signal and that is in the second measurement frame, and/or a 1st symbol that is located after the single-frequency sine wave signal and that is in the second measurement frame.

In this embodiment of this application, a possible specific implementation of obtaining the second measurement frame is provided. Specifically, the single-frequency sine wave signal included in the second measurement frame includes the at least two symbols, and each of the at least two symbols is obtained through Gaussian frequency-shift keying GFSK modulation based on the second bit. Compared with a frame structure design of "a preamble sequence+a synchronization sequence+data+a single-frequency sine wave" in the conventional technology that is still used for a current measurement frame, the second measurement frame obtained in this embodiment of this application does not include measurement result data or service data, so that an interval at which the single-frequency sine wave signal is transmitted between the first device and the second device can be shortened or a length, of the single-frequency sine wave, used for measurement can be increased, thereby reducing a measurement result error, of the measurement frame, caused by the timing and frequency differences between the first device clock and the second device clock. In this way, the error of the ranging result is reduced, and ranging accuracy is improved. Like the at least two symbols included in the single-frequency sine wave signal in the second measurement frame, the fourth symbol included in the second measurement frame is also obtained through Gaussian frequency-shift keying GFSK modulation based on the second bit. The fourth symbol includes the symbol that is located before and adjacent to the single-frequency sine wave signal and that is in the second measurement frame, and/or the 1st symbol that is located after the single-frequency sine wave signal and that is in the second measurement frame. According to this embodiment of this application, the single-frequency sine wave signal and adjacent symbols on two sides of a boundary of the single-frequency sine wave signal have a same mapping bit, and use a same modulation scheme, so that the measurement frame can be prevented from suddenly changing at the boundary, thereby suppressing signal distortion caused by the boundary, improving accuracy of the measurement result of the measurement frame, and improving ranging accuracy.

In a possible implementation, the method further includes:

The second device sends the ranging result, where the ranging result includes information about the distance between the first device and the second device.

In this embodiment of this application, a possible specific implementation of determining the second moment is provided. Specifically,

after performing ranging calculation based on the received first measurement result to obtain the ranging result, the second device may send the ranging result to the fourth device. The fourth device may be the first device, and is configured to measure the received second measurement frame to obtain the first measurement result, and send the first measurement result to the second device. Alternatively, the fourth device may be another device having no ranging calculation capability. The ranging result includes information about the distance between the first device and the second device.

According to a third aspect, an embodiment of this application provides a communication apparatus. The communication apparatus includes modules or units configured to perform the method according to any one of the first aspect or the second aspect.

In a possible implementation, the communication apparatus includes:

a transceiver unit, configured to send a first measurement frame to a second device on a first frequency, and receive a second measurement frame sent by the second device on the first frequency, where
the transceiver unit is further configured to send a third measurement frame to the second device on a second frequency, and receive a fourth measurement frame sent by the second device on the second frequency, where the second frequency is different from the first frequency; and
a processing unit, configured to obtain a first measurement result based on the second measurement frame, where the processing unit is further configured to obtain a third measurement result based on the fourth measurement frame; and
the transceiver unit is further configured to send the first measurement result and the third measurement result to a third device, where the first measurement result and the third measurement result are used for ranging.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the processing unit is further configured to determine the first frequency in the first frequency set in a pseudo-random manner based on a first random seed.

The processing unit is further configured to determine the second frequency in the second frequency set in a pseudo-random manner based on a second random seed.

In a possible implementation, the processing unit is further configured to generate and send, via the transceiver unit, the first random seed and/or the second random seed; or
the transceiver unit is further configured to receive the first random seed and/or the second random seed.

In a possible implementation, the first measurement result includes phase information or in-phase component and quadrature component IQ information of a single-frequency sine wave signal included in the second measurement frame at a first moment, or phase information or IQ information, at the first moment, of a signal obtained by extending the single-frequency sine wave signal included in the second measurement frame according to a single-frequency sine wave model.

In a possible implementation, the processing unit is further configured to determine a first timing offset, where the first timing offset represents a timing offset of the communication apparatus relative to the second measurement frame.

The processing unit is further configured to determine the first moment based on the first timing offset.

In a possible implementation, the first moment satisfies $T1=t0+t1/2$, where t0 represents a reference moment, t1 represents the first timing offset, and T1 represents the first moment.

In a possible implementation, the processing unit is specifically configured to determine the first timing offset by measuring a signal in the second measurement frame.

In a possible implementation, the transceiver unit is further configured to receive a first message, and/or send the first message, where the first message indicates the reference moment, or
the reference moment is a preconfigured or predefined moment.

In a possible implementation, the transceiver unit is further configured to receive a second message, and/or send the second message, where the second message indicates a reference value, or the reference value is a preconfigured or predefined value.

The processing unit is further configured to determine the reference moment based on the reference value and a first frequency offset, where the first frequency offset represents a frequency offset of the communication apparatus relative to the second measurement frame.

In a possible implementation, a single-frequency sine wave signal included in the first measurement frame includes at least two symbols, each of the at least two symbols is obtained through modulation based on a first sequence by using a first constellation diagram, the first sequence is a sequence including N bits, and a value of N corresponds to a modulation scheme of the first constellation diagram.

In a possible implementation, a first symbol is obtained through modulation based on the first sequence by using the first constellation diagram.

The first symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, a single-frequency sine wave signal included in the first measurement frame includes at least two symbols, and each of the at least two symbols is obtained through Gaussian frequency-shift keying GFSK modulation based on a first bit.

A second symbol is obtained through GFSK modulation based on the first bit.

The second symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, the transceiver unit is further configured to receive a ranging result, where the ranging result includes information about a distance between the communication apparatus and the second device.

For technical effect brought by the third aspect or any possible implementation, refer to descriptions of the technical effect corresponding to the first aspect or the corresponding implementations.

In another possible implementation, the communication apparatus includes:

a transceiver unit, configured to receive a first measurement frame sent by a first device on a first frequency, and send a second measurement frame to the first device on the first frequency, where

the transceiver unit is further configured to receive a third measurement frame sent by the first device on a second frequency, and send a fourth measurement frame to the first device on the second frequency, where the second frequency is different from the first frequency; and

a processing unit, configured to obtain a second measurement result based on the first measurement frame, where

the processing unit is further configured to obtain a fourth measurement result based on the third measurement frame;

the transceiver unit is further configured to receive a first measurement result and a third measurement result from a fourth device, where the first measurement result is a measurement result of the first device on the second measurement frame, and the third measurement result is a measurement result of the first device on the fourth measurement frame; and

the processing unit is further configured to determine a distance between the first device and the communication apparatus based on the first measurement result, the second measurement result, the third measurement result, and the fourth measurement result.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the processing unit is further configured to determine the first frequency in the first frequency set in a pseudo-random manner based on a first random seed.

The processing unit is further configured to determine the second frequency in the second frequency set in a pseudo-random manner based on a second random seed.

In a possible implementation, the processing unit is further configured to generate and send, via the transceiver unit, the first random seed and/or the second random seed; or

the transceiver unit is further configured to receive the first random seed and/or the second random seed.

In a possible implementation, the processing unit is further configured to obtain the second measurement result based on the first measurement frame, where the second measurement result includes phase information or in-phase component and quadrature component IQ information of a single-frequency sine wave signal included in the first measurement frame at a second moment, or phase information or IQ information, at the second moment, of a signal obtained by extending a single-frequency sine wave signal included in the first measurement frame according to a single-frequency sine wave model, and the second measurement result is used for ranging.

In a possible implementation, the processing unit is further configured to determine a second timing offset, where the second timing offset represents a timing offset of the communication apparatus relative to the first measurement frame.

The processing unit is further configured to determine the second moment based on the second timing offset.

In a possible implementation, the second moment satisfies T2=t0+t2/2, where t0 represents a reference moment, t2 represents the second timing offset, and T2 represents the second moment.

In a possible implementation, the processing unit is specifically configured to determine the second timing offset by measuring a signal in the first measurement frame.

In a possible implementation, the transceiver unit is further configured to send a first message, and/or receive the first message, where the first message indicates the reference moment, or

the reference moment is a preconfigured or predefined moment.

In a possible implementation, the transceiver unit is further configured to send a second message, and/or receive the second message, where the second message indicates a reference value, or the reference value is a preconfigured or predefined value.

The processing unit is further configured to determine the reference moment based on the reference value and a second frequency offset, where the second frequency offset represents a frequency offset of the communication apparatus relative to the first measurement frame.

In a possible implementation, a single-frequency sine wave signal included in the second measurement frame includes at least two symbols, each of the at least two symbols is obtained through modulation based on a second sequence by using a second constellation diagram, the second sequence is a sequence including M bits, and a value of M corresponds to a modulation scheme of the second constellation diagram.

In a possible implementation, a third symbol is obtained through modulation based on the second sequence by using the second constellation diagram.

The third symbol includes a symbol that is located before and adjacent to the single-frequency sine wave signal and that is in the second measurement frame, and/or a 1st symbol that is located after the single-frequency sine wave signal and that is in the second measurement frame.

In a possible implementation, a single-frequency sine wave signal included in the second measurement frame includes at least two symbols, and each of the at least two symbols is obtained through Gaussian frequency-shift keying GFSK modulation based on a second bit.

A fourth symbol is obtained through GFSK modulation based on the second bit.

The fourth symbol includes a symbol that is located before and adjacent to the single-frequency sine wave signal and that is in the second measurement frame, and/or a 1st symbol that is located after the single-frequency sine wave signal and that is in the second measurement frame.

In a possible implementation, the transceiver unit is further configured to send a ranging result, where the ranging result includes information about a distance between the first device and a second device.

For technical effect brought by the third aspect or any possible implementation, refer to descriptions of the technical effect corresponding to the second aspect or the corresponding implementations.

According to a fourth aspect, an embodiment of this application provides a communication apparatus, including a processor. The processor is coupled to a memory, and may be configured to execute instructions in the memory, to implement the method according to the first aspect or the second aspect and any possible implementation of the first aspect or the second aspect. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, so that the communication apparatus performs the method the first aspect or the second aspect and any possible implementation of the first aspect or the second aspect.

According to a sixth aspect, an embodiment of this application provides a computer-readable storage medium. The computer-readable storage medium is configured to store a computer program (which may also be referred to as code or instructions). When the computer program is run on a computer, the method the first aspect or the second aspect and any possible implementation of the first aspect or the second aspect is implemented.

According to a seventh aspect, an embodiment of this application provides a computer program product. The computer program product includes a computer program (which may also be referred to as code or instructions). When the computer program is run, a computer is enabled to perform the method the first aspect or the second aspect and any possible implementation of the first aspect or the second aspect.

According to an eighth aspect, an embodiment of this application provides a chip. The chip includes a processor, the processor is configured to execute instructions, and when the processor executes the instructions, the chip is enabled to perform the method the first aspect or the second aspect and any possible implementation of the first aspect or the second aspect. Optionally, the chip further includes a communication interface, and the communication interface is configured to receive a signal or send a signal.

According to a ninth aspect, an embodiment of this application provides a vehicle-end device. The vehicle-end device includes at least one of the communication apparatus in the third aspect, the communication apparatus in the fourth aspect, the communication apparatus in the fifth aspect, or the chip in the eighth aspect.

According to a tenth aspect, an embodiment of this application provides a system. The system includes a vehicle-end device and at least one of the communication apparatus in the third aspect, the communication apparatus in the fourth aspect, the communication apparatus in the fifth aspect, or the chip in the eighth aspect.

In addition, in a process of performing the method according to the first aspect and any possible implementation, or the method according to the second aspect and any possible implementation, a process of sending information and/or receiving information in the foregoing method may be understood as a process of outputting information by a processor, and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to the first aspect and any possible implementation, or the method according to the second aspect and any possible implementation, the processor may be a processor specially configured to perform these methods, or may be a processor, for example, a general-purpose processor, that executes these methods by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In embodiments of this application, the joint measurement result of the first frequency and the joint measurement result of the second frequency are not affected by the random initial phase caused by frequency switching of the device, and may be coherently combined, so that when the ranging result is calculated, the bandwidth greater than the bandwidth of the measurement frame of the single frequency can be used to calculate the ranging result, the more accurate ranging result can be obtained, and the ranging accuracy is improved.

## BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may derive other drawings from these accompanying drawings without creative efforts.

FIG. 1 is a diagram of bilateral measurement according to an embodiment of this application;
FIG. 2 is a diagram of an architecture of a communication system according to an embodiment of this application;
FIG. 3 is a schematic flowchart of a ranging method according to an embodiment of this application;
FIG. 4 is a schematic flowchart of another ranging method according to an embodiment of this application;
FIG. 5 is a schematic flowchart of still another ranging method according to an embodiment of this application;
FIG. 6 is a schematic flowchart of a frequency hopping algorithm according to an embodiment of this application;
FIG. 7 is a diagram of bilateral measurement according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip according to an embodiment of this application.

## DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in

EP 4 517 376 A1

combination with the embodiments may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

This application provides a ranging method. To describe the solutions of this application more clearly, the following first describes some knowledge related to ranging.

A frequency is a center frequency of a transmit signal. A device having a frequency hopping function may use a same frequency or different frequencies in two different signal transmission processes. The frequency may be indicated in an absolute frequency manner, or may be a number representing an absolute frequency.

A manner in which a communication device transmits a ranging signal to implement ranging is an important means for resolving a ranging/positioning problem. Ranging accuracy is closely related to a bandwidth covered by ranging signals that can be coherently combined. A wider bandwidth covered by the ranging signals indicates higher ranging accuracy.

When ranging is performed in a frequency hopping manner, a bandwidth occupied by a single transmission is small. However, if only the single transmission is used for ranging, ranging accuracy cannot meet a requirement. The bandwidth covered by the ranging signals may be expanded in a frequency hopping communication manner. However, each time frequency hopping is performed, a device clock generates a random phase. As a result, ranging signals received by the device on different frequencies cannot be directly coherently combined.

To resolve the foregoing random phase problem caused by frequency hopping, the random phase that is of the device clock and that is caused by frequency hopping may be eliminated through bilateral measurement, so that the ranging signals on the different frequencies can be coherently combined, to obtain higher ranging accuracy.

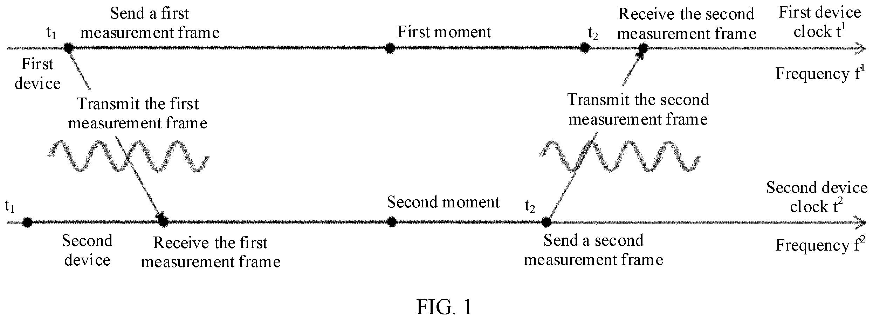

For a specific bilateral measurement process, refer to FIG. 1. FIG. 1 is a diagram of possible bilateral measurement according to an embodiment of this application.

As shown in FIG. 1, bilateral measurement means that a first device first sends a first measurement frame on each frequency-hopping frequency, where the first measurement frame includes a single-frequency sine wave signal; a second device receives the first measurement frame, and measures an in-phase component and quadrature component (in-phase and quadrature phase, IQ) value (or an amplitude value or phase information) of the single-frequency sine wave signal in the first measurement frame at a second moment, or an IQ value (or an amplitude value or phase information), at the second moment, of a signal obtained by extending the single-frequency sine wave signal in the first measurement frame according to a single-frequency sine wave model; and in actual processing, the IQ value may alternatively be obtained through calculation by using an algorithm, for example, parameter estimation, and the single-frequency sine wave signal is not extended; and then, the second device sends a second measurement frame, where the second measurement frame includes a single-frequency sine wave signal; the first device receives the second measurement frame, and measures an IQ value (or an amplitude and phase information) of the single-frequency sine wave signal in the second measurement frame at a first moment, or an IQ value (or an amplitude and phase information), at the first moment, of a signal obtained by extending the single-frequency sine wave signal in the second measurement frame according to a single-frequency sine wave model; and in actual processing, the IQ value may alternatively be obtained through calculation by using an algorithm, for example, parameter estimation, and the single-frequency sine wave signal is not extended. After a device (the first device, the second device, or another device) obtains the two measurement values (for example, in a wired and/or wireless communication manner), the two measurement values are combined (for example, simply multiplied) to obtain a reference value of the frequency-hopping frequency. Reference values of a plurality of frequency-hopping frequencies may be coherently combined for ranging, to obtain information about a distance between the first device and the second device.

However, in actual measurement, because there are timing and frequency differences between clocks of different devices, these differences cause ranging errors. In addition, in actual measurement, there is usually a relative movement between devices, and a change of a relative location between the devices during measurement also causes a ranging error.

For the technical problem that the ranging error is large and ranging accuracy needs to be improved in the foregoing ranging method, an embodiment of this application provides a communication architecture used for ranging, and correspondingly proposes a new ranging method based on the architecture. A joint measurement result of a first frequency and a joint measurement result of a second frequency are not affected by a random initial phase caused by frequency switching of a device, and may be coherently combined, so that when a ranging result is calculated, a bandwidth greater than a bandwidth of a measurement frame of a single frequency can be used to calculate the ranging result, a more accurate ranging result can be obtained, and ranging accuracy is improved.

The following describes embodiments of this application with reference to the accompanying drawings in embodiments of this application.

A method provided in this application may be applied to various communication systems, for example, an internet of things (Internet of things, IoT) system, a narrowband internet of things (narrowband internet of things, NB-IoT) system, a long term evolution (long term evolution, LTE) system, a short-range wireless communication system, for example, a sparklink (SparkLink) communication network system, a 5th generation (5th generation, 5G) communication system, and a new communication system (for example, 6G) emerging in future communication development.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet-of-things (internet-of-things, IoT) network, or another network. The IoT network may include, for example, an internet of vehicles. Communication modes in an internet of vehicles system are collectively referred to as vehicle-to-everything (vehicle-to-everything, V2X, where X may represent any thing). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

In the foregoing various communication systems, a device having a communication capability may be referred to as a node, or may be referred to as a communication node. For example, the node may include an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a part (for example, a chip or an integrated circuit) included in an independent device. The node may be any possible smart terminal device (for example, a mobile phone), a smart transportation device (for example, a vehicle or an uncrewed aerial vehicle), a smart manufacturing device, a smart home device (for example, a large screen or a speaker), or the like.

The node in embodiments of this application may be applied to a plurality of application scenarios, for example, the following application scenarios: mobile internet (mobile internet, MI), industrial control (industrial control), self driving (self driving), transportation safety (transportation safety), internet of things (internet of things, IoT), smart city (smart city), or smart home (smart home).

In some application scenarios or some network types, a name of a device having a similar communication capability may not be referred to as a node. This is not limited in this application.

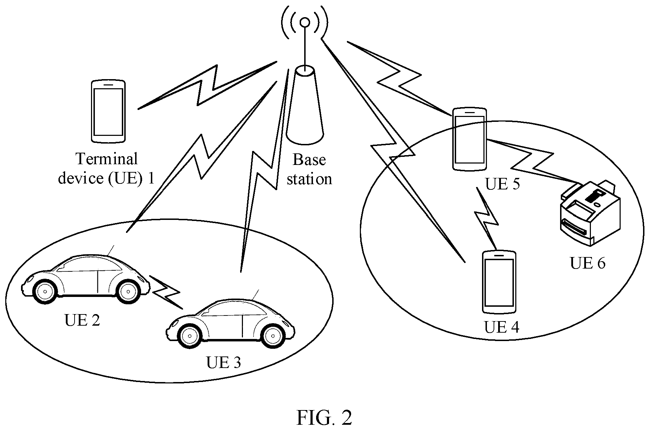

For example, in FIG. 2 shown below, nodes may communicate with each other by using a D2D technology, an M2M technology, a V2X technology, or the like.

FIG. 2 is a diagram of an architecture of a possible communication system according to an embodiment of this application.

As shown in FIG. 2, the communication system may include at least one first node (for example, a base station) and at least one second node (for example, UE).

The first node and the second node are described as follows:

For example, the first node may be a master device, and may be specifically a next-generation NodeB (next generation NodeB, gNB), a next-generation evolved NodeB (next generation evolved NodeB, ng-eNB), a node (for example, a master node or a G node in a sparklink communication network system) in a short-range wireless communication network system, an access network device in future 6G communication, or the like. The master device may be any device having a wireless transceiver function. The master device may be an access node, a wireless relay node, a wireless backhaul node, or the like in a wireless local area network (wireless fidelity, Wi-Fi) system. The master device may be a radio controller in a cloud radio access network (cloud radio access network, CRAN) scenario. The master device may be a wearable device, a vehicle-mounted device, or the like. The master device may be a small cell, a transmission reception point (transmission reception point, TRP) (may also be referred to as a transmission point), or the like.

For example, the second node may be a terminal device, and the terminal device may also be referred to as user equipment (user equipment, UE), a terminal, or the like. The terminal device is a device having a wireless transceiver function. The terminal device may be deployed on land, and includes an indoor device, an outdoor device, a handheld device, a wearable device, or a vehicle-mounted device. The terminal device may alternatively be deployed on the water, for example, on a ship. The terminal device may alternatively be deployed in the air, for example, deployed on an airplane, a balloon, or a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medicine (remote medicine), a wireless terminal in a smart grid (smart grid), a wireless terminal in transportation safety (transportation safety), a wireless terminal in a smart city (smart city), a wireless terminal in a smart home, or the like. It may be understood that the terminal device may alternatively be a node (for example, a slave node or a T node in a sparklink communication network system) in a short-range wireless communication network system, a terminal device in a future 6G network, a terminal device in a future evolved PLMN, or the like.

It may be understood that the terminal device shown in this application may not only include a vehicle (for example, a whole vehicle) in the internet of vehicles, but also may include an in-vehicle device, a vehicle-mounted terminal, or the like in the internet of vehicles. A specific form of the terminal device when applied to the internet of vehicles is not limited in this application.

It should be understood that FIG. 2 shows an example of a communication link between one base station and six UEs and between communication devices. Optionally, the communication system may include a plurality of base stations, and coverage of each base station may include another quantity of UEs, for example, more or fewer UEs. This is not limited in this application.

Optionally, communication links between the communication devices may include various types of connection media, including a wired link (for example, an optical fiber), a wireless link, a combination of a wired link and a wireless link, and the like. For example, the communication link may be a short-range connection technology including a sparklink (SparkLink), 802.11b/g, Bluetooth (Bluetooth), Zigbee (Zigbee), a radio frequency identification (radio frequency identification, RFID) technology, an ultra-wideband (ultra-wideband, UWB) technology, or a wireless short-range communication system (for example, a vehicle-mounted wireless short-range communication system).

A plurality of antennas may be configured for each of the foregoing communication devices, for example, the base station and UE 1 to UE 6 in FIG. 2. The plurality of antennas may include at least one transmit antenna configured to send a signal, at least one receive antenna configured to receive a signal, and the like. A specific structure of each communication device is not limited in embodiments of this application. Optionally, the communication system may further include another network entity such as a network controller or a mobility management entity. This is not limited in embodiments of this application.

It may be understood that the diagram of the communication architecture shown in FIG. 2 is merely an example. For a diagram of a communication architecture in another form, refer to a related standard or protocol. Details are not described herein again.

It may be understood that the ranging method provided in this application may be applied to not only the communication system shown in FIG. 2, but also a communication system in another form. The following embodiments may be applicable to the communication system shown in FIG. 2. Details are not described in the following.

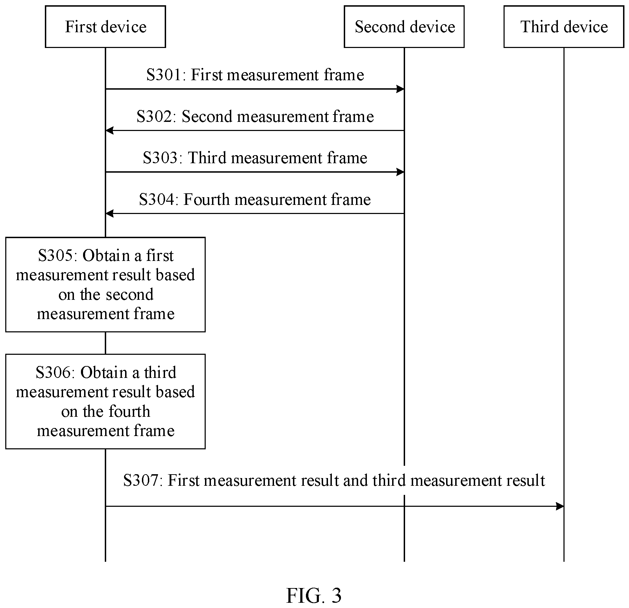

Correspondingly, this application proposes a new ranging method based on the architecture of the foregoing communication system. The following describes in detail the ranging method provided in this application with reference to FIG. 3 to FIG. 8.

FIG. 3 is a schematic flowchart of a ranging method according to an embodiment of this application. The ranging method includes but is not limited to the following steps.

S301: A first device sends a first measurement frame to a second device on a first frequency, and correspondingly, the second device receives the first measurement frame sent by the first device on the first frequency.

S302: The second device sends a second measurement frame to the first device on the first frequency, and correspondingly, the first device receives the second measurement frame sent by the second device on the first frequency.

S303: The first device sends a third measurement frame to the second device on a second frequency, and correspondingly, the second device receives, on the second frequency, the third measurement frame sent by the first device.

S304: The second device sends a fourth measurement frame to the first device on the second frequency, and correspondingly, the first device receives, on the second frequency, the fourth measurement frame sent by the second device.

It may be understood that a sequence of performing steps S301, S302, S303, and S304 is not limited in embodiments of this application, and is subject to interaction in an actual scenario.

The foregoing steps S301 to S304 may be understood as that the first device and the second device exchange measurement frames on at least two frequencies in a measurement process. For example, the first device sends the first measurement frame to the second device on the first frequency, and receives the second measurement frame sent by the second device on the first frequency; and the first device sends the third measurement frame to the second device on the second frequency, and receives, on the second frequency, the fourth measurement frame sent by the second device. The second frequency is different from the first frequency, the first measurement frame and the third measurement frame are used by the second device to obtain a second measurement result and a fourth measurement result, respectively, and the second measurement frame and the fourth measurement frame are used by the first device to obtain a first measurement result and a third measurement result, respectively.

It may be understood that the first device (and/or the second device) in this embodiment of this application is a device equipped with a processor that can be configured to execute computer-executable instructions, and may be a terminal device (for example, a vehicle-mounted terminal), may be a network device (for example, a serving base station), or the like. Specifically, the first device (and/or the second device) may be the second node (for example, any device of the UE 1 to the UE 6) in FIG. 2, or may be the first node in FIG. 2, configured to perform the ranging method in this embodiment of this application, so as to reduce a ranging error and improve ranging accuracy.

In a possible embodiment, the first frequency and the second frequency may be determined in manners including but not limited to the following manners.

The first frequency is obtained from a first frequency set, and then the second frequency is obtained from a second frequency set.

A difference between the first frequency set and the second frequency set is that the first frequency set includes the first frequency, and the second frequency set does not include the first frequency. It may be understood that the second frequency set is a frequency set obtained after the first frequency is removed from the first frequency set.

In addition, the first frequency and the second frequency are two adjacent frequencies in a time order of use, where that the first frequency and the second frequency are adjacent in the time order of use may be understood as follows:

The first device and the second device first exchange measurement frames on the first frequency, then exchange measurement frames on the second frequency, and in time between the two measurement frame exchanges, do not exchange measurement frames on a frequency other than the first frequency and the second frequency. It should be understood that use herein means that the first device and the second device exchange measurement frames, and that the first frequency and the second frequency are adjacent in the time order of use does not exclude a case in which the first device and the second device exchange non-measurement frames on another frequency in the time between the foregoing two measurement frame exchanges, for example, exchange a frame that is used to transmit service data, a measurement result, signaling, or the like but is not used for ranging measurement. Herein, a case in which devices other than the first device and the second device exchange any type of frame on any frequency in the time between the foregoing two measurement frame exchanges is not excluded.

According to this embodiment of this application, the first frequency and the second frequency are the two adjacent frequencies in the time order of use, so that a same frequency can be avoided from being repeatedly used during measurement, thereby shortening measurement time for ranging. If there is a relative movement between the first device and the second device, shortening the measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the measurement time for ranging can reduce a range of the device clock frequency drift during measurement, suppress impact of the clock drift on the ranging result, and improve ranging accuracy.

Optionally, a used frequency may be determined in a corresponding frequency set in a pseudo-random manner based on a random seed.

For example, the first frequency is determined in the first frequency set in a pseudo-random manner based on a first random seed, and the second frequency is determined in the second frequency set in a pseudo-random manner based on a second random seed.

The first random seed used for determining the first frequency and the second random seed used for determining the second frequency may be a same random seed, or may be different random seeds.

According to this embodiment of this application, the frequency is determined in the pseudo-random manner based on the random seed, so that the determined frequency is random, thereby reducing a probability that mutual interference is caused when a same time-frequency resource is used when a spectrum is shared with another device, and improving ranging performance.

Optionally, the first device may obtain, in one of a plurality of manners, the random seed required for determining the frequency,

for example, Manner 1. The first device generates the first random seed and/or the second random seed and sends the first random seed and/or the second random seed to the second device; Manner 2. The first device generates the first random seed and/or the second random seed and sends the first random seed and/or the second random seed to another device, and then the another device forwards the first random seed and/or the second random seed to the second device; Manner 3. The first device receives the first random seed and/or the second random seed from the second device; Manner 4. The first device receives the first random seed and/or the second random seed from another device, where before that, the first random seed and/or the second random seed of the another device are/is generated by the second device and sent to the another device; and Manner 5. Another device generates the first random seed and/or the second random seed, and sends the first random seed and/or the second random seed to the first device.

Correspondingly, the second device may also obtain, in one of a plurality of manners, the random seed required for determining the frequency,

for example, Manner 1. The second device generates the first random seed and/or the second random seed and sends the first random seed and/or the second random seed to the first device; Manner 2. The second device generates the first random seed and/or the second random seed and sends the first random seed and/or the second random seed to another device, and then the another device forwards the first random seed and/or the second random seed to the first device; Manner 3. The second device receives the first random seed and/or the second random seed from the first device; Manner 4. The second device receives the first random seed and/or the second random seed from another device, where before that, the first random seed and/or the second random seed of the another device are/is generated by the first device and sent to the another device; and Manner 5. Another device generates the first random seed and/or the second random seed, and sends the first random seed and/or the second random seed to the second device.

According to this embodiment of this application, the first device and the second device use a same first random seed when selecting the first frequency, and use a same second random seed when selecting the second frequency. Therefore, the first device and the second device select a same first frequency and a same second frequency, to avoid a frequency selection error.

S305: The first device obtains the first measurement result based on the second measurement frame.

S306: The first device obtains the third measurement result based on the fourth measurement frame.

Because step S305 is similar to step S306, the following uses S305 as an example for description. For an execution process of S306, refer to S305. Details are not described herein again.

The first device measures the second measurement frame, to obtain the first measurement result.

The first measurement result includes phase information or in-phase component and quadrature component IQ information of a single-frequency sine wave signal included in the second measurement frame at a first moment; or the first measurement result includes phase information or in-phase component and quadrature component IQ information, at the first moment, of a signal obtained by extending the single-frequency sine wave signal included in the second measurement frame according to a single-frequency sine wave model. In actual processing, the IQ information may alternatively be obtained through calculation by using an algorithm, for example, parameter estimation, and the single-frequency sine wave signal is not extended.

According to this embodiment of this application, the ranging method based on the phase information or the IQ information including the phase information can obtain higher ranging accuracy than a conventional amplitude-based ranging method.

In a possible implementation, to obtain the first measurement result, the first moment needs to be determined, and the first moment may be determined in manners including but not limited to the following manners.

The first device determines a first timing offset, and determines the first moment based on the first timing offset.

The first timing offset represents a timing offset of the first device relative to the second measurement frame.

According to this embodiment of this application, a moment corresponding to the phase information or the IQ information is corrected based on the measured timing offset, so that impact of timing and frequency differences between a first device clock and a second device clock on the ranging result can be suppressed, and ranging accuracy can be improved.

Optionally, the first device determines the first timing offset by measuring a signal in the second measurement frame.

Optionally, the first device may alternatively determine the first timing offset by measuring another signal sent by the second device, where the another signal may include a signal in another measurement frame or a signal in another non-measurement frame.

Based on the first timing offset determined in this embodiment of this application, the timing offset can be corrected, the timing and frequency differences between the first device clock and the second device clock are reduced, and impact on the measurement result of the measurement frame is reduced, thereby reducing an error of the ranging result and improving ranging accuracy.

For example, the first moment satisfies $T1=t0+t1/2$, where

$t0$ represents a reference moment, $t1$ represents the first timing offset, and $T1$ represents the first moment.

In this embodiment of this application, the first moment is determined. Correspondingly, the second device also determines a second moment by using a similar method. A difference between real time corresponding to the first moment of the first device clock and real time corresponding to the second moment of the second device clock is mainly related to a measurement error between the first timing offset and a second timing offset, and is irrelevant to a timing offset between the first device clock and the second device clock. A joint measurement result of the first frequency obtained by combining the first measurement result and the second measurement result is not affected by the timing offset between the first device clock and the second device clock, so that impact of the timing offset between the first device clock and the second device clock on the ranging result is suppressed, and ranging accuracy is improved.

Optionally, the reference moment may be obtained in manners including but not limited to the following manners.

Manner 1: The first device receives a first message and/or sends the first message, and determines the reference moment via information indicated by the first message.

Manner 2: The first device receives a second message and/or sends the second message, and determines the reference moment based on a first frequency offset and a reference value indicated by the second message. The first frequency offset represents a frequency offset of the first device relative to the second measurement frame.

Manner 3: The reference moment is a preconfigured or predefined moment. Specifically, the reference moment may be a moment preconfigured by the first device, or may be a moment preconfigured by another device, or may be a moment specified in a protocol. This is not limited in embodiments of this application.

Manner 4: A reference value is a preconfigured or predefined value. Specifically, the reference value may be a reference value preconfigured by the first device, or may be a reference value preconfigured by another device, or may be a reference value specified in a protocol. This is not limited in embodiments of this application. The first device determines the reference moment based on the first frequency offset and the preconfigured or predefined reference value.

Correspondingly, the second moment satisfies T2=t0+t2/2, where

t0 represents the reference moment, t2 represents the second timing offset, that is, represents a timing offset of the second device relative to the first measurement frame, and T2 represents the second moment.

The second moment is used for obtaining the second measurement result based on the first measurement frame. The second measurement result includes phase information or in-phase component and quadrature component IQ information of a single-frequency sine wave signal included in the first measurement frame at a second moment; or the second measurement result includes phase information or in-phase component and quadrature component IQ information, at the second moment, of a signal obtained by extending the single-frequency sine wave signal included in the first measurement frame according to a single-frequency sine wave model. In actual processing, the IQ information may alternatively be obtained through calculation by using an algorithm, for example, parameter estimation, and the single-frequency sine wave signal is not extended.

According to this embodiment of this application, the first device and the second device use a same agreed reference value, and the first device determines the reference moment based on the frequency offset and the reference value, to correct impact of a change of a timing offset caused by the frequency offset with time on the reference moment. Therefore, the measurement moment is determined based on the reference moment, so that impact of the timing and frequency differences between the first device clock and the second device clock on the measurement result of the measurement frame can be suppressed, thereby reducing the error of the ranging result and improving ranging accuracy.

In a possible implementation, reference moments corresponding to different frequencies are the same or different, and/or reference values corresponding to different frequencies are the same or different.

In a possible implementation, when the first device and/or the second device exchange/exchanges measurement frames via a plurality of antennas, when different antenna combinations are used to exchange measurement frames on a same frequency, used reference moments are the same or different, and/or when different antenna combinations are used to exchange measurement frames on a same frequency, used reference values are the same or different.

For example, the first device exchanges a measurement frame with the second device via the antenna 1, and the second device exchanges a measurement frame with the first device via the antenna 2. In this case, the antenna 1 of the first device and the antenna 2 of the second device form one antenna combination. The first device sends a measurement frame via a transmit antenna 3, and receives a measurement frame via a receive antenna 4. The second device sends a measurement frame via a transmit antenna 5, and receives a measurement frame via a receive antenna 6. In this case, the transmit antenna 3 and the receive antenna 4 of the first device, and the transmit antenna 5 and the receive antenna 6 of the second device form one antenna combination. This is not limited in embodiments of this application.

S307: The first device sends the first measurement result and the third measurement result to a third device, and correspondingly, the third device receives the first measurement result and the third measurement result sent by the first device.

The first measurement result and the third measurement result may be used to obtain information about a distance between the first device and the second device through calculation.

Optionally, the first device receives the ranging result.

Specifically, that the first device receives the ranging result may be that the first device receives a ranging result sent by the third device. The third device may be the second device, and is configured to obtain the ranging result through calculation based on the received first measurement result and the received third measurement result, and the second measurement result and the fourth measurement result that are obtained through measurement by the third device, and send the ranging result to the first device. Alternatively, the third device may be another device having a ranging calculation capability, and send a ranging result obtained through calculation to the first device. The ranging result includes the information about the distance between the first device and the second device.

It may be understood that the third device in this embodiment of this application is a device equipped with a processor that can be configured to execute computer-executable instructions, and may be a terminal device (for example, a vehicle-mounted terminal), may be a network device (for example, a serving base station), or the like. Specifically, the third device may be the second node (for example, any device of the UE 1 to the UE 6) in FIG. 2, or may be the first node in FIG. 2, configured to perform the ranging method in this embodiment of this application, so as to reduce the ranging error and improve ranging accuracy.

It may be understood that the third device in this embodiment of this application may be the second device, or may be another device. The following describes different cases of the third device.

Case 1:

When the third device and the second device are a same device, it is equivalent to that the first device obtains the first measurement result based on the second measurement frame sent by the second device on the first frequency, and sends the first measurement result to the second device (that is, the third device), and the first device obtains the third measurement result based on, on the second frequency, the fourth measurement frame sent by the second device, and sends the third measurement result to the second device (that is, the third device). Correspondingly, the second device receives the first measurement result and the third measurement result sent by the first device, where the first measurement result and the third measurement result are used by the second device to perform ranging calculation.

Optionally, the second device (that is, the third device) obtains the ranging result based on the received first measurement result, the received third measurement result, and/or another measurement result.

The ranging result includes the information about the distance between the first device and the second device. The another measurement result may include the second measurement result obtained by the second device based on the first measurement frame sent by the first device on the first frequency, or the fourth measurement result obtained by the second device based on the third measurement frame sent by the first device on the second frequency, may include a measurement result obtained by the second device based on a measurement frame sent by the first device on another frequency, or may include a measurement result obtained by the first device based on a measurement frame sent by the second device on another frequency. This is not limited in embodiments of this application.

Optionally, after obtaining the ranging result, the second device (that is, the third device) sends the ranging result to the first device.

It may be understood that, in Case 1, the second device is a device having a signal frame measurement capability and having a ranging calculation capability, and may perform ranging calculation based on the measurement result obtained by measuring the signal frame of the second device and the received measurement result sent by the first device, to obtain the information about the distance between the first device and the second device. The first device is a device having a signal frame measurement capability but having no ranging calculation capability, and may measure the signal frame to obtain the measurement result, and send the measurement result to the second device. The first device needs to depend on the second device to perform ranging calculation to obtain the information about the distance between the first device and the second device.

Case 2:

When the third device and the second device are different devices, it is equivalent to that the first device obtains the first measurement result based on the second measurement frame sent by the second device on the first frequency, and sends the first measurement result to the third device, and the first device obtains the third measurement result based on, on the second frequency, the fourth measurement frame sent by the second device, and sends the third measurement result to the third device. Correspondingly, the third device receives the first measurement result and the third measurement result sent by the first device, where the first measurement result and the third measurement result are used by the third device to perform ranging calculation.

Optionally, the third device obtains the ranging result based on the received first measurement result, the received third measurement result, and/or another measurement result.

The ranging result includes the information about the distance between the first device and the second device. The another measurement result may include the second measurement result obtained by the second device based on the first measurement frame sent by the first device on the first frequency, or the fourth measurement result obtained by the second device based on the third measurement frame sent by the first device on the second frequency, may include a measurement result obtained by the second device based on a measurement frame sent by the first device on another frequency, or may include a measurement result obtained by the first device based on a measurement frame sent by the second device on another frequency. This is not limited in embodiments of this application.

Optionally, after obtaining the ranging result, the third device sends the ranging result to the first device and/or the second device.

It may be understood that, in Case 2, the third device is different from the second device, and the third device is a device having a ranging calculation capability. The third device does not participate in signal frame exchange and signal frame measurement between the first device and the second device. The third device may perform ranging based on the received measurement result sent by the first device and/or the received measurement result sent by the second device, to obtain the information about the distance between the first device and the second device, and send the information to the first device and/or the second device. The first device is a device having a signal frame measurement capability but having no ranging calculation capability, and may measure the signal frame to obtain the measurement result, and send the measurement result to the third device. The first device needs to depend on the third device to perform ranging calculation to obtain the information about the distance between the first device and the second device. The second device is a device having a signal frame measurement capability but having no ranging calculation capability, and may measure the signal frame to obtain the measurement result, and send the measurement result to the third device. The second device needs to depend on the third device to perform ranging calculation to obtain the information about the distance between the first device and the second device.

In this embodiment of this application, the joint measurement result of the first frequency is obtained by combining the first measurement result and the second measurement result, and the joint measurement result of the first frequency is not affected by initial phases of the first device and the second device on the first frequency. A joint measurement result of the second frequency is obtained by combining the third measurement result and the fourth measurement result, and the joint measurement result of the second frequency is not affected by initial phases of the first device and the second device on the second frequency. Therefore, the joint measurement result of the first frequency and the joint measurement result of the second frequency are not affected by the random initial phase caused by frequency switching of the device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

In addition, in this embodiment of this application, a measurement process (for example, the foregoing steps S301 to S304) is separated from a measurement result interaction process (for example, the foregoing steps S305 to S307), so that measurement time can be shortened, and a change amount of a relative location between the first device and the second device during measurement can be reduced, so as to obtain a more accurate ranging result, improve ranging accuracy, and more flexibly support a plurality of different communication architectures used for ranging.

In a possible embodiment, measurement frames (such as the first measurement frame, the second measurement frame, the third measurement frame, and the fourth measurement frame) received and sent by the first device and the second device in a measurement interaction process may be implemented in manners including but not limited to the following manners (for ease of description, the following uses the first measurement frame as an example for description):

Manner 1: The single-frequency sine wave signal included in the first measurement frame includes at least two symbols, and each of the at least two symbols is obtained through modulation based on a first sequence by using a first constellation diagram.

The first sequence is a sequence including N bits, and a value of N corresponds to a modulation scheme of the first constellation diagram.

For example, a value of N corresponding to a binary phase shift keying (binary phase shift keying, BPSK) modulation scheme is 1, a value of N corresponding to a quadrature phase shift keying (quadrature phase shift keying, QPSK) modulation scheme is 2, and a value of N corresponding to an 8 phase shift keying (8 phase shift keying, 8PSK) modulation scheme is 3.

Optionally, like the at least two symbols included in the single-frequency sine wave signal in the first measurement frame, a first symbol included in the first measurement frame is obtained through modulation based on the first sequence by using the first constellation diagram.

The first symbol includes a symbol that is located before and adjacent to the single-frequency sine wave signal and that is in the first measurement frame, and/or a 1st symbol that is located after the single-frequency sine wave signal and that is in the first measurement frame.

Manner 2: The single-frequency sine wave signal included in the first measurement frame includes at least two symbols, and each of the at least two symbols is obtained through Gaussian frequency-shift keying GFSK modulation based on a first bit.

In addition, like the at least two symbols included in the single-frequency sine wave signal in the first measurement frame, a second symbol included in the first measurement frame is also obtained through Gaussian frequency-shift keying GFSK modulation based on the first bit.

The second symbol includes a symbol that is located before and adjacent to the single-frequency sine wave signal and that is in the first measurement frame, and/or a 1st symbol that is located after the single-frequency sine wave signal and that is in the first measurement frame.

In this embodiment of this application, a same modulation scheme is used for the single-frequency sine wave signal in the first measurement frame and another signal, to avoid extra implementation complexity and extra time overheads caused by modulation scheme switching, so as to shorten or increase a time length of a signal used for measurement in the first measurement frame, for example, a length of the single-frequency sine wave signal. The length of the measurement frame is shortened, so that an interval at which the single-frequency sine wave signal is transmitted between the first device and the second device and total measurement time for ranging can be shortened. In consideration of non-ideality of a clock, a ranging result error caused by the clock frequency offset between the first device and the second device is related to the interval at which the single-frequency sine wave signal is transmitted between the first device and the second device. With a same frequency offset, a larger interval indicates a larger error. The interval at which the single-frequency sine wave signal is transmitted between the first device and the second device is shortened, so that impact of the clock frequency offset between the first device and the second device on the ranging result can be suppressed. If there is a relative movement between the first device and the second device, shortening the total measurement time for ranging can reduce a change amount of a relative location between the first device and the second device during measurement, so as to obtain a more accurate ranging result, and improve ranging accuracy. In addition, for the first device and the second device, due to non-ideality of a clock, a device clock frequency drifts with time. Longer measurement time indicates more serious drift. Shortening the total measurement time for ranging can reduce a range of the device clock frequency drift during measurement, suppress impact of the clock drift on the ranging result, and improve ranging accuracy. Increasing the time length of the signal used for measurement in the first measurement frame can improve accuracy of obtaining the second measurement result by the second device based on the first measurement frame, thereby improving ranging accuracy.

In addition, according to this embodiment of this application, the single-frequency sine wave signal and adjacent symbols on two sides of a boundary of the single-frequency sine wave signal have a same mapping bit, and use a same modulation scheme, so that the measurement frame can be prevented from suddenly changing at the boundary, thereby suppressing signal distortion caused by the boundary, improving accuracy of the measurement result of the measurement frame, and improving ranging accuracy.

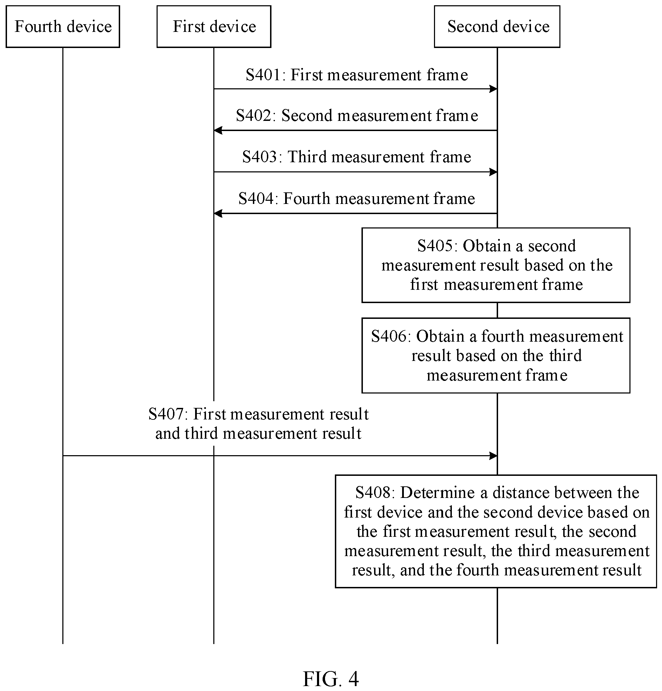

FIG. 4 is a schematic flowchart of another ranging method according to an embodiment of this application. The ranging method includes but is not limited to the following steps.

S401: A first device sends a first measurement frame to a second device on a first frequency, and correspondingly, the second device receives the first measurement frame sent by the first device on the first frequency.

S402: The second device sends a second measurement frame to the first device on the first frequency, and correspondingly, the first device receives the second measurement frame sent by the second device on the first frequency.

S403: The first device sends a third measurement frame to the second device on a second frequency, and correspondingly, the second device receives, on the second frequency, the third measurement frame sent by the first device.

S404: The second device sends a fourth measurement frame to the first device on the second frequency, and correspondingly, the first device receives, on the second frequency, the fourth measurement frame sent by the second device.

It may be understood that a sequence of performing steps S401, S402, S403, and S404 is not limited in embodiments of this application.

The foregoing steps S401 to S404 may be understood as that the first device and the second device exchange measurement frames on at least two frequencies in a measurement process. For example, the first device sends the first measurement frame to the second device on the first frequency, and receives the second measurement frame sent by the second device on the first frequency; and the first device sends the third measurement frame to the second device on the second frequency, and receives, on the second frequency, the fourth measurement frame sent by the second device. The second frequency is different from the first frequency, the first measurement frame and the third measurement frame are used by the second device to obtain a second measurement result and a fourth measurement result, respectively, and the second measurement frame and the fourth measurement frame are used by the first device to obtain a first measurement result and a third measurement result, respectively.

It may be understood that the first device (and/or the second device) in this embodiment of this application is a device equipped with a processor that can be configured to execute computer-executable instructions, and may be a terminal device (for example, a vehicle-mounted terminal), may be a network device (for example, a serving base station), or the like. Specifically, the first device (and/or the second device) may be the second node (for example, any device of the UE 1 to the UE 6) in FIG. 2, or may be the first node in FIG. 2, configured to perform the ranging method in this embodiment of this application, so as to reduce a ranging error and improve ranging accuracy.

In a possible embodiment, for a manner of determining the first frequency and the second frequency, refer to related descriptions of the foregoing steps S301 to S304. Details are not described herein again.

S405: The second device obtains the second measurement result based on the first measurement frame.

S406: The second device obtains the fourth measurement result based on the third measurement frame.

Steps S405 and S406 are similar to the foregoing steps S305 and S306. For an execution process of the steps S405 and S406, refer to the foregoing related descriptions. Details are not described herein again.

S407: The second device receives the first measurement result and the third measurement result from a fourth device, and correspondingly, the fourth device sends the first measurement result and the third measurement result to the second device.

The first measurement result includes phase information or in-phase component and quadrature component IQ information of a single-frequency sine wave signal included in the second measurement frame at a first moment; or the first measurement result includes phase information or in-phase component and quadrature component IQ information, at the first moment, of a signal obtained by extending the single-frequency sine wave signal included in the second measurement frame according to a single-frequency sine wave model. In actual processing, the IQ information may alternatively be obtained through calculation by using an algorithm, for example, parameter estimation, and the single-frequency sine wave signal is not extended.

According to this embodiment of this application, the ranging method based on the phase information or the IQ information including the phase information can obtain higher ranging accuracy than a conventional amplitude-based ranging method.

Correspondingly, the second measurement result includes phase information or in-phase component and quadrature component IQ information of a single-frequency sine wave signal included in the first measurement frame at a second moment; or the second measurement result includes phase information or in-phase component and quadrature component IQ information, at the second moment, of a signal obtained by extending the single-frequency sine wave signal included in the first measurement frame according to a single-frequency sine wave model. In actual processing, the IQ information may alternatively be obtained through calculation by using an algorithm, for example, parameter estimation, and the single-frequency sine wave signal is not extended.

In a possible embodiment, to obtain the second measurement result, the second moment needs to be determined. For a manner of determining the second moment, refer to related description of step S305. Details are not described herein again.

According to this embodiment of this application, the first device and the second device use a same agreed reference value, and the first device determines the reference moment based on the frequency offset and the reference value, to correct impact of a change of a timing offset caused by the frequency offset with time on the reference moment. Therefore, the measurement moment is determined based on the reference moment, so that impact of the timing and frequency differences between the first device clock and the second device clock on the measurement result of the measurement frame can be suppressed, thereby reducing the error of the ranging result and improving ranging accuracy.

S408: The second device determines a distance between the first device and the second device based on the first measurement result, the second measurement result, the third measurement result, and the fourth measurement result.

Optionally, the second device sends the ranging result.

Specifically, that the second device sends the ranging result may be that the second device sends a ranging result to the fourth device. The fourth device may be the first device, and is configured to obtain the first measurement result and the third measurement result through measurement based on the received second measurement frame and the received fourth measurement frame, and send the first measurement result and the third measurement result to the second device, for the second device to perform ranging calculation. Alternatively, the fourth device may be another device having a ranging calculation capability, and send a ranging result obtained through calculation to the second device. The ranging result includes information about the distance between the first device and the second device.

It may be understood that the fourth device in this embodiment of this application is a device equipped with a processor that can be configured to execute computer-executable instructions, and may be a terminal device (for example, a vehicle-mounted terminal), may be a network device (for example, a serving base station), or the like. Specifically, the fourth device may be the second node (for example, any device of the UE 1 to the UE 6) in FIG. 2, or may be the first node in FIG. 2, configured to perform the ranging method in this embodiment of this application, so as to reduce a ranging error and improve ranging accuracy.

It may be understood that the fourth device in this embodiment of this application may be the first device, or may be another device. The following describes different cases of the fourth device.

Case 1:

When the fourth device and the first device are a same device, it is equivalent to that the first device (that is, the fourth device) obtains the first measurement result based on the second measurement frame sent by the second device on the first frequency, and sends the first measurement result to the second device, and the first device (that is, the fourth device) obtains the third measurement result based on, on the second frequency, the fourth measurement frame sent by the second device, and sends the third measurement result to the second device. Correspondingly, the second device receives the first measurement result and the third measurement result sent by the first device, where the first measurement result and the third measurement result are used by the second device to perform ranging calculation.

Optionally, the second device obtains the ranging result based on the received first measurement result, the received third measurement result, and/or another measurement result.

The ranging result includes the information about the distance between the first device and the second device. The another measurement result may include the second measurement result obtained by the second device based on the first measurement frame sent by the first device on the first frequency, or the fourth measurement result obtained by the second device based on the third measurement frame sent by the first device on the second frequency, may include a measurement result obtained by the second device based on a measurement frame sent by the first device on another frequency, or may include a measurement result obtained by the first device based on a measurement frame sent by the second device on another frequency. This is not limited in embodiments of this application.

Optionally, after obtaining the ranging result, the second device sends the ranging result to the first device (that is, the fourth device).

It may be understood that, in Case 1, the second device is a device having a signal frame measurement capability and having a ranging calculation capability, and may perform ranging calculation based on the measurement result obtained by measuring the signal frame of the second device and the received measurement result sent by the first device (that is, the fourth device), to obtain the information about the distance between the first device and the second device. The first device (that is, the fourth device) is a device having a signal frame measurement capability but having no ranging calculation capability, and may measure the signal frame to obtain the measurement result, and send the measurement result to the second device. The first device needs to depend on the second device to perform ranging calculation to obtain the information about the distance between the first device and the second device.

Case 2:

When the fourth device and the first device are different devices, it is equivalent to that the first device obtains the first measurement result based on the second measurement frame sent by the second device on the first frequency, and sends the first measurement result to the fourth device, and the first device obtains the third measurement result based on, on the second frequency, the fourth measurement frame sent by the second device, and sends the third measurement result to the fourth device. Correspondingly, the fourth device receives the first measurement result and the third measurement result sent by the first device, and forwards the first measurement result and the third measurement result to the second device, where the first measurement result and the third measurement result are used by the second device to perform ranging calculation.

Optionally, the second device obtains the ranging result based on the received first measurement result, the received third measurement result, and/or another measurement result.

The ranging result includes the information about the distance between the first device and the second device. The another measurement result may include the second measurement result obtained by the second device based on the first measurement frame sent by the first device on the first frequency, or the fourth measurement result obtained by the second device based on the third measurement frame sent by the first device on the second frequency, may include a measurement result obtained by the second device based on a measurement frame sent by the first device on another frequency, or may include a measurement result obtained by the first device based on a measurement frame sent by the second device on another frequency. This is not limited in embodiments of this application.

Optionally, after obtaining the ranging result, the second device sends the ranging result to the fourth device and/or the first device.

It may be understood that, in Case 2, the fourth device is different from the first device. The fourth device is a device having no ranging calculation capability, and the fourth device does not participate in signal frame exchange and signal frame measurement between the first device and the second device. The fourth device may receive the measurement result sent by the first device and/or receive a measurement result sent by another device, and forward the measurement result to the second device. The first device is a device having a signal frame measurement capability but having no ranging calculation capability, and may measure the signal frame to obtain the measurement result, and send the measurement result to the fourth device. The measurement result needs to be forwarded by the fourth device to the second device. The first device needs to depend on the second device to perform ranging calculation to obtain the information about the distance between the first device and the second device. The second device is a device having a signal frame measurement capability and having a ranging calculation capability, and may measure the signal frame to obtain the measurement result, perform ranging calculation based on the received measurement result sent by the fourth device and/or the measurement result obtained by the second device through measurement, to obtain the information about the distance between the first device and the second device, and send the information about the distance to the fourth device and/or the first device.

In this embodiment of this application, a joint measurement result of the first frequency is obtained by combining the first measurement result and the second measurement result, and the joint measurement result of the first frequency is not affected by initial phases of the first device and the second device on the first frequency. A joint measurement result of the second frequency is obtained by combining the third measurement result and the fourth measurement result, and the joint measurement result of the second frequency is not affected by initial phases of the first device and the second device on the second frequency. Therefore, the joint measurement result of the first frequency and the joint measurement result of the second frequency are not affected by the random initial phase caused by frequency switching of the device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

In addition, in this embodiment of this application, a measurement process (for example, the foregoing steps S401 to S404) is separated from a measurement result interaction process (for example, the foregoing steps S405 to S408), so that measurement time can be shortened, and a change amount of a relative location between the first device and the second device during measurement can be reduced, so as to obtain a more accurate ranging result, improve ranging accuracy, and more flexibly support a plurality of different communication architectures used for ranging.

In a possible embodiment, for a manner of obtaining measurement frames (such as the first measurement frame, the second measurement frame, the third measurement frame, and the fourth measurement frame) sent and received by the first device and the second device in a measurement interaction process, refer to related description of step S307. Details are not described herein again.

It should be understood that steps S401 to S404 in this embodiment of this application are similar to steps S301 to S304 in FIG. 3, and steps S405 to S408 in this embodiment of this application are variations or supplements to steps S305 to S307 in FIG. 3.

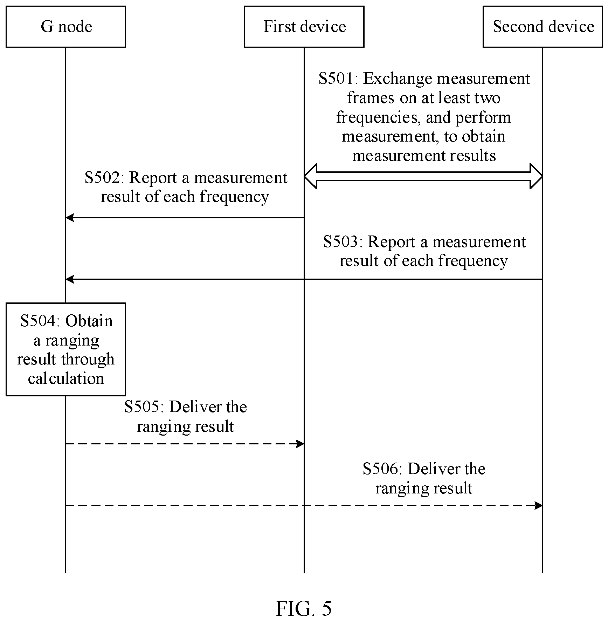

FIG. 5 is a schematic flowchart of still another ranging method according to an embodiment of this application. The ranging method is applied to the field of communication technologies, and the ranging method includes but is not limited to the following steps:

S501: A first device and a second device exchange measurement frames on at least two frequencies, and perform measurement, to obtain measurement results.

It may be understood that the first device and the second device exchange the measurement frames on the at least two frequencies in a measurement process. In other words, the first device sends a first measurement frame to the second device on a first frequency, and receives a second measurement frame sent by the second device on the first frequency; and the first device sends a third measurement frame to the second device on a second frequency, and receives, on the second frequency, a fourth measurement frame sent by the second device. The second frequency is different from the first frequency, the first measurement frame and the third measurement frame are used by the second device to obtain a second measurement result and a fourth measurement result, respectively, and the second measurement frame and the fourth measurement frame are used by the first device to obtain a first measurement result and a third measurement result, respectively.

It may be understood that the first device (and/or the second device) in this embodiment of this application is a device equipped with a processor that can be configured to execute computer-executable instructions, and may be a terminal device (for example, a vehicle-mounted terminal), may be a network device (for example, a serving base station), or the like. Specifically, the first device (and/or the second device) may be the second node (for example, any device of the UE 1 to the UE 6) in FIG. 2, or may be the first node in FIG. 2, configured to perform the ranging method in this embodiment of this application, so as to reduce a ranging error and improve ranging accuracy.

In a possible embodiment, for a manner of determining the first frequency and the second frequency, refer to related descriptions of the foregoing steps S301 to S304. Details are not described herein again.

In a possible embodiment, to obtain the measurement result, the first device needs to determine a measurement moment. For a manner of determining the measurement moment, refer to related description of step S305. Details are not described herein again.

In a possible embodiment, to obtain the measurement result, the second device needs to determine a measurement moment. For a manner of determining the measurement moment, refer to related description of step S305. Details are not described herein again.

In a possible embodiment, for a relationship that needs to be met between the measurement moment determined by the first device and the measurement moment determined by the second device, refer to related description of step S305. Details are not described herein again.

S502: The first device reports a measurement result of each frequency to a G node.

S503: The second device reports a measurement result of each frequency to the G node.

It may be understood that a sequence of performing steps S502 and S503 is not limited in embodiments of this application.

The G node may also be referred to as a master node, a management node, or a control node. The G node and a T node are two types of nodes that are distinguished in terms of logical functions. The T node may also be referred to as a slave node or a terminal. The G node manages the T node, has a resource allocation function, and is responsible for allocating a resource to the T node. The T node is subject to scheduling of the G node, and uses the resource allocated by the G node for communication, ranging, and the like. The nodes may be various apparatuses. For example, the G node is a mobile phone, and the T node is a headset. The mobile phone establishes a communication connection to the headset to implement data exchange. The mobile phone manages the headset. The mobile phone has a resource allocation function, and may allocate a resource to the headset. For another example, the G node is a positioning server, and the T node is a positioning base station and a positioning tag. The positioning server manages the positioning base station and the positioning tag, and allocates, to the positioning base station and the positioning tag, resources used for measurement frame exchange.

S504: The G node obtains a ranging result through calculation based on the measurement result of each frequency reported by the first device and the measurement result of each frequency reported by the second device.

The ranging result includes information about a distance between the first device and the second device.

It may be understood that the G node in this embodiment of this application is a device equipped with a processor that can be configured to execute computer-executable instructions, and may be a terminal device (for example, a vehicle-mounted terminal), may be a network device (for example, a serving base station), or the like. Specifically, the G node may be the second node (for example, any device of the UE 1 to the UE 6) in FIG. 2, or may be the first node (for example, a base station) in FIG. 2, configured to perform the ranging method in this embodiment of this application, so as to reduce a ranging error and improve ranging accuracy.

It may be understood that the G node is different from the first device and the second device.

The G node is a device having a ranging calculation capability. The G node does not participate in signal frame exchange and signal frame measurement between the first device and the second device. The G node may perform ranging based on the received measurement result sent by the first device and/or the received measurement result sent by the second device, to obtain the information about the distance between the first device and the second device.

Optionally, S505: The G node delivers the ranging result to the first device.

Optionally, S506: The G node delivers the ranging result to the second device.

It may be understood that a sequence of performing steps S505 and S506 is not limited in embodiments of this application.

In this embodiment of this application, the first device and the second device exchange the measurement frames on the at least two frequencies in the measurement process, and the at least two frequencies are different. Joint measurement results of frequencies are not affected by a random initial phase caused by frequency switching of a device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

In addition, in this embodiment of this application, a measurement process (for example, the foregoing step S501) is separated from a measurement result interaction process (for example, the foregoing steps S502 to S503), so that measurement time can be shortened, and a change amount of a relative location between the first device and the second device during measurement can be reduced, so as to obtain a more accurate ranging result, improve ranging accuracy, and more flexibly support a plurality of different communication architectures used for ranging.

In a possible embodiment, for a manner of obtaining measurement frames sent and received by the first device and the second device in a measurement interaction process, refer to related description of step S307. Details are not described herein again.

It should be understood that step S501 in this embodiment of this application is similar to steps S301 to S304 in FIG. 3 and steps S401 to S404 in FIG. 4. Steps S502 to S506 in this embodiment of this application are variations or supplements to steps S305 to S307 in FIG. 3, or variations or supplements to steps S405 to S408 in FIG. 4.

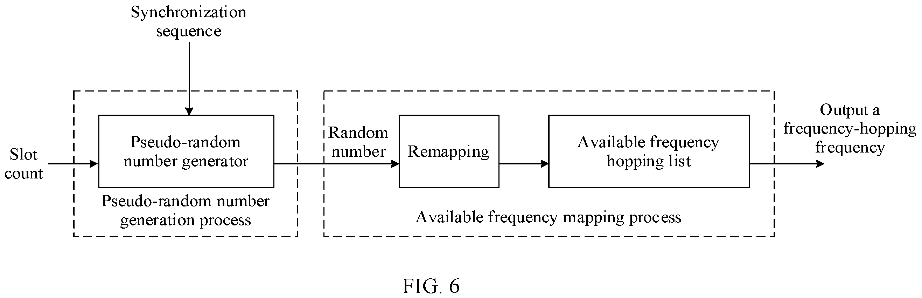

FIG. 6 is a schematic flowchart of a frequency hopping algorithm according to an embodiment of this application. Specifically, it may be understood as a variation or supplement of content about "an implementation for determining the first frequency and the second frequency" in FIG. 3 to FIG. 5.

As shown in FIG. 6, a synchronization sequence and a slot count are input into a pseudo-random number generator to obtain a random number, and then the random number is remapped to obtain an available frequency. The foregoing process is performed for a plurality of times to obtain an available frequency hopping list including a plurality of available frequencies. A frequency may be selected from the available frequency hopping list and output as a frequency-hopping frequency.

For example, a first random seed is generated, or a first random seed sent by another device is received, a first frequency is determined in a first frequency set (that is, the foregoing available frequency hopping list) in a pseudo-random manner based on the first random seed, and the first frequency is output as a frequency-hopping frequency.

A second random seed is generated, or a second random seed sent by another device is received, a second frequency is determined in a second frequency set (that is, an available frequency hopping list obtained after the first frequency is removed) in a pseudo-random manner based on the second random seed, and the second frequency is output as a next frequency-hopping frequency.

The first random seed used for determining the first frequency and the second random seed used for determining the second frequency may be a same random seed, or may be different random seeds.

According to this embodiment of this application, the frequency is determined in the pseudo-random manner based on the random seed, so that the determined frequency is random, thereby reducing a probability that mutual interference is caused when a same time-frequency resource is used when a spectrum is shared with another device, and improving ranging performance. In addition, the first device and the second device use a same first random seed when selecting the first frequency, and use a same second random seed when selecting the second frequency. Therefore, the first device and the second device select a same first frequency and a same second frequency, to avoid a frequency selection error.

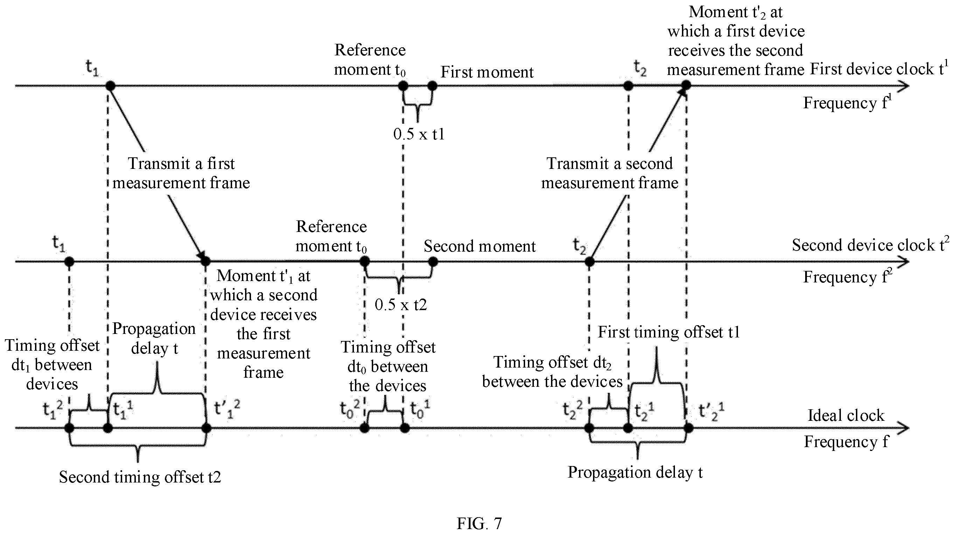

FIG. 7 is a diagram of bilateral measurement according to an embodiment of this application. Specifically, it may be understood as a variation or supplement of content about "an implementation for determining the measurement moment (the first moment and/or the second moment)" in FIG. 3 to FIG. 5.

As shown in FIG. 7, a first device sends a first measurement frame to a second device at a moment $t_1$, and correspondingly, the second device receives the first measurement frame sent by the first device at a moment $t'_1$. The second device measures the first measurement frame, and determines a phase or an IQ value at a first moment. The second device sends a second measurement frame to the first device at a moment $t_2$, and correspondingly, the first device receives the second measurement frame sent by the second device at a moment $t'_2$. The first device measures the second measurement frame, and determines a phase or an IQ value at a second moment.

It can be seen from FIG. 7 that, when the two devices exchange measurement frames, there is a propagation delay t (t may be understood as an ideal average value) between sending a measurement frame by one device and receiving the measurement frame by the other device, and both timing and frequency differences between a first device clock and a second device clock affect a measurement result of the measurement frame. As a result, an error of the ranging result is large, and ranging accuracy is low.

Therefore, to suppress impact of the timing and frequency differences between the first device clock and the second device clock on the measurement result of the measurement frame, so as to reduce the error of the ranging result and improve the ranging accuracy, this embodiment of this application provides a relationship that needs to be met between a measurement moment (the first moment) at which the first device measures the second measurement frame and a measurement moment (the second moment) at which the second device measures the first measurement frame.

For example, the relationship that is met between the first moment and the second moment may be specifically as follows.

The first device uses $t_0 + (t'_2 - t_2)/2$ as the second moment. In this case, a second moment on an ideal clock corresponds to:

$$t_0^1 + \frac{\left(t'^1_2 - t^1_2\right)}{2} = t_0^1 + \frac{\left(\left(t'^1_2 - t^2_2\right) - \left(t^1_2 - t^2_2\right)\right)}{2} = t_0^1 + \frac{t - dt_2}{2}.$$

The second device uses $t_0 + (t'_1 - t_1)/2$ as the first moment. In this case, a first moment on the ideal clock corresponds to:

$$t_0^2 + \frac{\left(t'^2_1 - t^2_1\right)}{2} = t_0^2 + \frac{\left(\left(t'^2_1 - t^1_1\right) + \left(t^1_1 - t^2_1\right)\right)}{2} = t_0^2 + \frac{t + dt_1}{2} = t_0^1 - dt_0 + \frac{t + dt_1}{2}.$$

Because the $\text{first moment–the second moment} = dt_0 - \frac{dt_2 + dt_1}{2}$, if a frequency offset of the device clock is ignored, $dt_0 = dt_1 = dt_2$. The first moment is equal to the second moment, that is, the measurement moments of the first device and the second device are the same. This avoids a ranging error caused by different measurement moments of the two devices.

A moment $t_1$ of the second device clock corresponds to real time (that is, ideal clock time in FIG. 7) $t^2_1$, a moment $t_1$ of the first device clock corresponds to real time (that is, ideal clock time in FIG. 7) $t^1_1$, a moment $t'_1$ of the second device clock corresponds to real time (that is, ideal clock time in FIG. 7) $t'^2_1$, a moment $t_0$ of the second device clock corresponds to real time (that is, ideal clock time in FIG. 7) $t^2_0$, a moment $t_0$ of the first device clock corresponds to real time (that is, ideal clock in FIG. 7) $t^1_0$, a moment $t_2$ of the second device clock corresponds to real time (that is, ideal clock time in FIG. 7) $t^2_2$, a moment $t_2$ of the first device clock corresponds to real time (that is, ideal clock time in FIG. 7) $t^1_2$, and a moment $t'_2$ of the first device clock corresponds to real time (that is, ideal clock time in FIG. 7) $t'^1_2$.

In addition, if the frequency offset of the device clock is not ignored,

$$t_0^1 - t_1^1 = \frac{f}{f^1}(t_0 - t_1),$$

and

$$t_0^2 - t_1^2 = \frac{f}{f^2}(t_0 - t_1).$$

If the two formulas are subtracted, the left of the equal sign is:

$$t_0^1 - t_1^1 - t_0^2 - t_1^2 = (t_0^1 - t_0^2) - (t_1^1 - t_1^2) = dt_0 - dt_1,$$

and
the right of the equal sign is:

$$\frac{f}{f^1}(t_0 - t_1) - \frac{f}{f^2}(t_0 - t_1) = \left(\frac{f}{f^1} - \frac{f}{f^2}\right)(t_0 - t_1) = \frac{(f^2 - f^1)}{f}\left(\frac{ff}{f^1 f^2}\right)(t_0 - t_1).$$

Therefore, the following can be obtained:

$$dt_0 - dt_1 = \frac{(f^2 - f^1)}{f}\left(\frac{ff}{f^1 f^2}\right)(t_0 - t_1).$$

Similarly, the following can be obtained:

$$dt_0 - dt_2 = \frac{(f^2 - f^1)}{f}\left(\frac{ff}{f^1 f^2}\right)(t_0 - t_2).$$

$$\text{First moment–second moment} = dt_0 - \frac{dt_2 + dt_1}{2} = \frac{(f^2 - f^1)}{f}\left(\frac{ff}{f^1 f^2}\right)\left(t_0 - \frac{t_1 + t_2}{2}\right) \approx \frac{(f^2 - f^1)}{f}\left(t_0 - \frac{t_1 + t_2}{2}\right).$$

For example, the following lists three methods for correcting a reference moment based on the frequency offset, so that the first moment is approximately equal to the second moment.

Method 1:

A second node does not correct the reference moment, that is, the reference moment=reference value $t_0$.
A first node additionally corrects the reference moment. Specifically, the reference moment=reference value $t_0 + \frac{(f^2 - f^1)}{f}\left(t_0 - \frac{t_1 + t_2}{2}\right)$, (denoted as Formula 1).
$f$, $t_0$, $t_1$, and $t_2$ are all configured values (configurations include: receiving a corresponding configuration message, and determining a parameter by a node and sending a configuration message to configure another node; and the node that generates the parameter may be the first node, the second node, or another node), preconfigured values, or values specified in a protocol. $f^2 - f^1$ is a frequency offset that is of the second device relative to the first device and that is determined by the first node by measuring a signal (which may be a measurement frame or another signal) sent by the second device.

Method 2:

A first node does not correct the reference moment, that is, the reference moment=reference value $t_0$.
A second node additionally corrects the reference moment. Specifically, the reference moment=reference value $t_0 + \frac{(f^1 - f^2)}{f}\left(t_0 - \frac{t_1 + t_2}{2}\right)$, (denoted as Formula 2).
$f^1 - f^2$ is a frequency offset that is of the first device relative to the second device and that is determined by the second node by measuring a signal (which may be a measurement frame or another signal) sent by the first device.

Method 3:

A first node additionally corrects the reference moment. Specifically, the reference moment=reference value

$$t_0 + \frac{(f2 - f1)}{2f}\left(t_0 - \frac{t_1 + t_2}{2}\right)$$ , (denoted as Formula 3).

A second node additionally corrects the reference moment. Specifically, the reference moment=reference value

$$t_0 + \frac{(f1 - f2)}{2f}\left(t_0 - \frac{t_1 + t_2}{2}\right)$$ , (denoted as Formula 4).

$f2 - f1$ is a frequency offset that is of the second device relative to the first device and that is determined by the first node by measuring a signal (which may be a measurement frame or another signal) sent by the second device, and $f1 - f2$ is a frequency offset that is of the first device relative to the second device and that is determined by the second node by measuring a signal (which may be a measurement frame or another signal) sent by the first device.

Optionally, in Formula 1, Formula 2, Formula 3, and Formula 4 in the foregoing manners, $t_1$ may be replaced with t1', and $t_2$ may be replaced with t2'.

The foregoing t1' represents a moment at which a first timing offset t1 is determined. In other words, the first device measures a signal in the second measurement frame at the moment t1', or measures another signal sent by the second device, to determine the first timing offset t1. The another signal may include a signal in another measurement frame or a signal in another non-measurement frame. The foregoing t2' represents a moment at which a second timing offset t2 is determined. In other words, the second device measures a signal in the first measurement frame at the moment t2', or measures another signal sent by the first device, to determine the second timing offset t2. The another signal may include a signal in another measurement frame or a signal in another non-measurement frame.

It should be understood that the relationship between the first moment and the second moment is merely used as an optional implementation or a possible implementation, and it is not excluded that there may be another relationship between the first moment and the second moment. Therefore, this should not constitute a limitation on this application.

According to this embodiment of this application, the first moment is determined based on the timing offset of the first device relative to the second measurement frame, and the second moment is determined based on the timing offset of the second device relative to the first measurement frame, so that the timing offset can be corrected, and the timing and frequency differences between the first device clock and the second device clock can be reduced. In addition, the first device and the second device determine measurement moments by using a same agreed reference moment, so that impact of the timing and frequency differences between the first device clock and the second device clock on the measurement result of the measurement frame can be suppressed, thereby reducing the error of the ranging result and improving the ranging accuracy.

The foregoing describes in detail the methods in embodiments of this application. The following provides an apparatus for implementing any method in embodiments of this application. For example, an apparatus is provided, and includes units (or means) configured to implement steps performed by a device in any one of the foregoing methods.

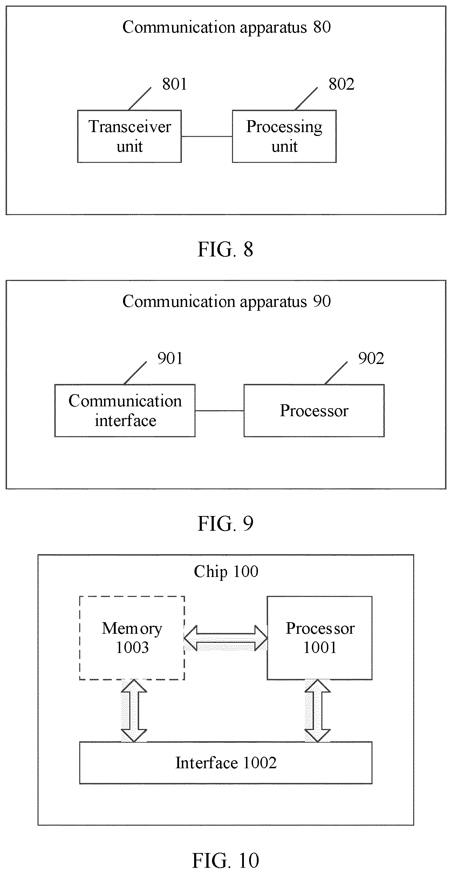

FIG. 8 is a diagram of a structure of a communication apparatus according to an embodiment of this application.

As shown in FIG. 8, a communication apparatus 80 may include a transceiver unit 801 and a processing unit 802. The transceiver unit 801 and the processing unit 802 may be software, hardware, or a combination of the software and the hardware.

The transceiver unit 801 may implement a sending function and/or a receiving function, and the transceiver unit 801 may also be described as a communication unit. Alternatively, the transceiver unit 801 may be a unit integrating an obtaining unit and a sending unit. The obtaining unit is configured to implement a receiving function, and the sending unit is configured to implement a sending function. Optionally, the transceiver unit 801 may be configured to receive information sent by another apparatus, and may be further configured to send information to another apparatus.

In a possible implementation, the communication apparatus 80 may correspond to the first device in the method embodiment in FIG. 3. The communication apparatus 80 may be the first device, or may be a chip in the first device. The communication apparatus 80 may include units configured to perform the operations performed by the first device in the method embodiment shown in FIG. 3, and the units in the communication apparatus 80 are separately configured to implement the operations performed by the first device in the method embodiment shown in FIG. 3. The units are described as follows.

The transceiver unit 801 is configured to send a first measurement frame to a second device on a first frequency, and receive a second measurement frame sent by the second device on the first frequency.

The transceiver unit 801 is further configured to send a third measurement frame to the second device on a second frequency, and receive a fourth measurement frame sent by the second device on the second frequency, where the second frequency is different from the first frequency.

The processing unit 802 is configured to obtain a first measurement result based on the second measurement frame.

The processing unit 802 is further configured to obtain a third measurement result based on the fourth measurement frame.

The transceiver unit 801 is further configured to send the first measurement result and the third measurement result to a third device, where the first measurement result and the third measurement result are used for ranging.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the processing unit 802 is further configured to determine the first frequency in the first frequency set in a pseudo-random manner based on a first random seed.

The processing unit 802 is further configured to determine the second frequency in the second frequency set in a pseudo-random manner based on a second random seed.

In a possible implementation, the processing unit 802 is further configured to generate and send, via the transceiver unit 801, the first random seed and/or the second random seed; or

the transceiver unit 801 is further configured to receive the first random seed and/or the second random seed.

In a possible implementation, the first measurement result includes phase information or in-phase component and quadrature component IQ information of a single-frequency sine wave signal included in the second measurement frame at a first moment, or phase information or IQ information, at the first moment, of a signal obtained by extending the single-frequency sine wave signal included in the second measurement frame according to a single-frequency sine wave model.

In a possible implementation, the processing unit 802 is further configured to determine a first timing offset, where the first timing offset represents a timing offset of the communication apparatus relative to the second measurement frame.

The processing unit 802 is further configured to determine the first moment based on the first timing offset.

In a possible implementation, the first moment satisfies $T1=t0+t1/2$, where t0 represents a reference moment, t1 represents the first timing offset, and T1 represents the first moment.

In a possible implementation, the processing unit 802 is specifically configured to determine the first timing offset by measuring a signal in the second measurement frame.

In a possible implementation, the transceiver unit 801 is further configured to receive a first message, and/or send the first message, where the first message indicates the reference moment, or

the reference moment is a preconfigured or predefined moment.

In a possible implementation, the transceiver unit 801 is further configured to receive a second message, and/or send the second message, where the second message indicates a reference value, or the reference value is a preconfigured or predefined value.

The processing unit 802 is further configured to determine the reference moment based on the reference value and a first frequency offset, where the first frequency offset represents a frequency offset of the communication apparatus relative to the second measurement frame.

In a possible implementation, a single-frequency sine wave signal included in the first measurement frame includes at least two symbols, each of the at least two symbols is obtained through modulation based on a first sequence by using a first constellation diagram, the first sequence is a sequence including N bits, and a value of N corresponds to a modulation scheme of the first constellation diagram.

In a possible implementation, a first symbol is obtained through modulation based on the first sequence by using the first constellation diagram.

The first symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, a single-frequency sine wave signal included in the first measurement frame includes at least two symbols, and each of the at least two symbols is obtained through Gaussian frequency-shift keying GFSK modulation based on a first bit.

A second symbol is obtained through GFSK modulation based on the first bit.

The second symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, the transceiver unit 801 is further configured to receive a ranging result, where the ranging result includes information about a distance between the communication apparatus and the second device.

In another possible implementation, the communication apparatus 80 may correspond to the second device in the method embodiment in FIG. 4. The communication apparatus 80 may be the second device, or may be a chip in the second device. The communication apparatus 80 may include units configured to perform the operations performed by the second device in the method embodiment shown in FIG. 4, and the units in the communication apparatus 80 are separately configured to implement the operations performed by the second device in the method embodiment shown in FIG. 4. The units are described as follows.

The transceiver unit 801 is configured to receive a first measurement frame sent by a first device on a first frequency, and send a second measurement frame to the first device on the first frequency.

The transceiver unit 801 is further configured to receive a third measurement frame sent by the first device on a second frequency, and send a fourth measurement frame to the first device on the second frequency, where the second frequency is different from the first frequency.

The processing unit 802 is configured to obtain a second measurement result based on the first measurement frame.

The processing unit 802 is further configured to obtain a fourth measurement result based on the third measurement frame.

The transceiver unit 801 is further configured to receive a first measurement result from a fourth device, where the first measurement result is a measurement result of the first device on the second measurement frame.

The processing unit 802 is further configured to determine a distance between the first device and the communication apparatus based on the first measurement result, the second measurement result, the third measurement result, and the fourth measurement result.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the processing unit 802 is further configured to determine the first frequency in the first frequency set in a pseudo-random manner based on a first random seed.

The processing unit 802 is further configured to determine the second frequency in the second frequency set in a pseudo-random manner based on a second random seed.

In a possible implementation, the processing unit 802 is further configured to generate and send, via the transceiver unit 801, the first random seed and/or the second random seed; or

the transceiver unit 801 is further configured to receive the first random seed and/or the second random seed.

In a possible implementation, the processing unit 802 is further configured to obtain the second measurement result based on the first measurement frame, where the second measurement result includes phase information or in-phase component and quadrature component IQ information of a single-frequency sine wave signal included in the first measurement frame at a second moment, or phase information or IQ information, at the second moment, of a signal obtained by extending a single-frequency sine wave signal included in the first measurement frame according to a single-frequency sine wave model, and the second measurement result is used for ranging.

In a possible implementation, the processing unit 802 is further configured to determine a second timing offset, where the second timing offset represents a timing offset of the communication apparatus relative to the first measurement frame.

The processing unit 802 is further configured to determine the second moment based on the second timing offset.

In a possible implementation, the second moment satisfies T2=t0+t2/2, where t0 represents a reference moment, t2 represents the second timing offset, and T2 represents the second moment.

In a possible implementation, the processing unit 802 is specifically configured to determine the second timing offset by measuring a signal in the first measurement frame.

In a possible implementation, the transceiver unit 801 is further configured to send a first message, and/or receive the first message, where the first message indicates the reference moment, or

the reference moment is a preconfigured or predefined moment.

In a possible implementation, the transceiver unit 801 is further configured to send a second message, and/or receive the second message, where the second message indicates a reference value, or the reference value is a preconfigured or predefined value.

The processing unit 802 is further configured to determine the reference moment based on the reference value and a second frequency offset, where the second frequency offset represents a frequency offset of the communication apparatus relative to the first measurement frame.

In a possible implementation, a single-frequency sine wave signal included in the second measurement frame includes at least two symbols, each of the at least two symbols is obtained through modulation based on a second sequence by using a second constellation diagram, the second sequence is a sequence including M bits, and a value of M corresponds to a modulation scheme of the second constellation diagram.

In a possible implementation, a third symbol is obtained through modulation based on the second sequence by using the second constellation diagram.

The third symbol includes a symbol that is located before and adjacent to the single-frequency sine wave signal and that is in the second measurement frame, and/or a $1^{st}$ symbol that is located after the single-frequency sine wave signal and that is in the second measurement frame.

In a possible implementation, a single-frequency sine wave signal included in the second measurement frame includes at least two symbols, and each of the at least two symbols is obtained through Gaussian frequency-shift keying GFSK modulation based on a second bit.

A fourth symbol is obtained through GFSK modulation based on the second bit.

The fourth symbol includes a symbol that is located before and adjacent to the single-frequency sine wave signal and that is in the second measurement frame, and/or a 1st symbol that is located after the single-frequency sine wave signal and that is in the second measurement frame.

In a possible implementation, the transceiver unit 801 is further configured to send a ranging result, where the ranging result includes information about a distance between the first device and a second device.

According to this embodiment of this application, the units in the apparatus shown in FIG. 8 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, a device may alternatively include another unit. In actual application, the functions may be implemented with assistance of the another unit, and may be implemented by a plurality of units in collaboration.

It should be noted that, for implementation of each unit, refer to corresponding descriptions in the method embodiments shown in FIG. 3, FIG. 4, and FIG. 5.

In the communication apparatus 80 described in FIG. 8, a joint measurement result of the first frequency and a joint measurement result of the second frequency are not affected by a random initial phase caused by frequency switching of a device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

FIG. 9 is a diagram of a structure of a communication apparatus according to an embodiment of this application.

It should be understood that the communication apparatus 90 shown in FIG. 9 is merely an example. The communication apparatus in this embodiment of this application may further include other components, may include components having functions similar to those of components in FIG. 9, or may not necessarily include all components in FIG. 9.

The communication apparatus 90 includes a communication interface 901 and at least one processor 902.

The communication apparatus 90 may correspond to any network element or device in a first device, a second device, a third device, a fourth device, or a G node. The communication interface 901 is configured to receive and send a signal, and the at least one processor 902 executes program instructions, to enable the communication apparatus 90 to implement a corresponding procedure of the method executed by a corresponding device in the foregoing method embodiment.

In a possible implementation, the communication apparatus 90 may correspond to the first device in the method embodiment in FIG. 3. The communication apparatus 90 may be the first device, or may be a chip in the first device. The communication apparatus 90 may include components configured to perform the operations performed by the first device in the method embodiment, and the components in the communication apparatus 90 are separately configured to implement the operations performed by the first device in the method embodiment. Details may be as follows:

A first device sends a first measurement frame to a second device on a first frequency, and receives a second measurement frame sent by the second device on the first frequency;

the first device sends a third measurement frame to the second device on a second frequency, and receives a fourth measurement frame sent by the second device on the second frequency, where the second frequency is different from the first frequency;

the first device obtains a first measurement result based on the second measurement frame;

the first device obtains a third measurement result based on the fourth measurement frame; and

the first device sends the first measurement result and the third measurement result to a third device, where the first measurement result and the third measurement result are used for ranging.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the method further includes:

The first device determines the first frequency in the first frequency set in a pseudo-random manner based on a first random seed; and

the first device determines the second frequency in the second frequency set in a pseudo-random manner based on a second random seed.

In a possible implementation, the method further includes:

The first device generates and sends the first random seed and/or the second random seed; or

the first device receives the first random seed and/or the second random seed.

In a possible implementation, the first measurement result includes phase information or in-phase component and quadrature component IQ information of a single-frequency sine wave signal included in the second measurement frame at a first moment, or phase information or IQ information, at the first moment, of a signal obtained by extending the single-frequency sine wave signal included in the second measurement frame according to a single-frequency sine wave model.

In a possible implementation, the method further includes:

The first device determines a first timing offset, where the first timing offset represents a timing offset of the first device relative to the second measurement frame; and

the first device determines the first moment based on the first timing offset.

In a possible implementation, the first moment satisfies T1=t0+t1/2, where t0 represents a reference moment, t1 represents the first timing offset, and T1 represents the first moment.

In a possible implementation, the determining a first timing offset includes:

The first device determines the first timing offset by measuring a signal in the second measurement frame.

In a possible implementation, the method further includes:

The first device receives a first message, and/or sends the first message, where the first message indicates the reference moment, or

the reference moment is a preconfigured or predefined moment.

In a possible implementation, the method further includes:

The first device receives a second message, and/or sends the second message, where the second message indicates a reference value, or the reference value is a preconfigured or predefined value; and

determines the reference moment based on the reference value and a first frequency offset, where the first frequency offset represents a frequency offset of the first device relative to the second measurement frame.

In a possible implementation, a single-frequency sine wave signal included in the first measurement frame includes at least two symbols, each of the at least two symbols is obtained through modulation based on a first sequence by using a first constellation diagram, the first sequence is a sequence including N bits, and a value of N corresponds to a modulation scheme of the first constellation diagram.

In a possible implementation, a first symbol is obtained through modulation based on the first sequence by using the first constellation diagram.

The first symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, a single-frequency sine wave signal included in the first measurement frame includes at least two symbols, and each of the at least two symbols is obtained through Gaussian frequency-shift keying GFSK modulation based on a first bit.

A second symbol is obtained through GFSK modulation based on the first bit.

The second symbol includes a symbol that is located before and adjacent to the single-frequency sine wave signal and that is in the first measurement frame, and/or a 1st symbol that is located after the single-frequency sine wave signal and that is in the first measurement frame.

In a possible implementation, the method further includes:

The first device receives a ranging result, where the ranging result includes information about a distance between the first device and the second device.

In another possible implementation, the communication apparatus 90 may correspond to the second device in the method embodiment in FIG. 4. The communication apparatus 90 may be the second device, or may be a chip in the second device. The communication apparatus 90 may include components configured to perform the operations performed by the second device in the method embodiment, and the components in the communication apparatus 90 are separately configured to implement the operations performed by the second device in the method embodiment. Details may be as follows:

A second device receives a first measurement frame sent by a first device on a first frequency, and sends a second measurement frame to the first device on the first frequency;

the second device receives a third measurement frame sent by the first device on a second frequency, and sends a fourth measurement frame to the first device on the second frequency, where the second frequency is different from the first frequency;

the second device obtains a second measurement result based on the first measurement frame;

the second device obtains a fourth measurement result based on the third measurement frame;

the second device receives a first measurement result and a third measurement result from a fourth device, where the first measurement result is a measurement result of the first device on the second measurement frame, and the third measurement result is a measurement result of the first device on the fourth measurement frame; and

the second device determines a distance between the first device and the second device based on the first measurement result, the second measurement result, the third measurement result, and the fourth measurement result.

In a possible implementation, the first frequency and the second frequency are adjacent frequencies in a time order of use, the first frequency belongs to a first frequency set, the second frequency belongs to a second frequency set, and the first frequency set includes the first frequency and the second frequency set.

In a possible implementation, the method further includes:

The second device determines the first frequency in the first frequency set in a pseudo-random manner based on a first random seed; and

the second device determines the second frequency in the second frequency set in a pseudo-random manner based on a second random seed.

In a possible implementation, the method further includes:

The second device generates and sends the first random seed and/or the second random seed; or

the second device receives the first random seed and/or the second random seed.

In a possible implementation, the method further includes:

The second device obtains the second measurement result based on the first measurement frame, where the second measurement result includes phase information or in-phase component and quadrature component IQ information of a single-frequency sine wave signal included in the first measurement frame at a second moment, or phase information or IQ information, at the second moment, of a signal obtained by extending a single-frequency sine wave signal included in the first measurement frame according to a single-frequency sine wave model, and the second measurement result is used for ranging.

In a possible implementation, the method further includes:

The second device determines a second timing offset, where the second timing offset represents a timing offset of the second device relative to the first measurement frame; and

the second device determines the second moment based on the second timing offset.

In a possible implementation, the second moment satisfies $T2=t0+t2/2$, where t0 represents a reference moment, t2 represents the second timing offset, and T2 represents the second moment.

In a possible implementation, the determining a second timing offset includes:

The second device determines the second timing offset by measuring a signal in the first measurement frame.

In a possible implementation, the method further includes:

The second device sends a first message, and/or receives the first message, where the first message indicates the reference moment, or

the reference moment is a preconfigured or predefined moment.

In a possible implementation, the method further includes:

The second device sends a second message, and/or receives the second message, where the second message indicates a reference value, or the reference value is a preconfigured or predefined value; and

determines the reference moment based on the reference value and a second frequency offset, where the second frequency offset represents a frequency offset of the second device relative to the first measurement frame.

In a possible implementation, a single-frequency sine wave signal included in the second measurement frame includes at least two symbols, each of the at least two symbols is obtained through modulation based on a second sequence by using a second constellation diagram, the second sequence is a sequence including M bits, and a value of M corresponds to a modulation scheme of the second constellation diagram.

In a possible implementation, a third symbol is obtained through modulation based on the second sequence by using the second constellation diagram.

The third symbol includes a symbol that is located before and adjacent to the single-frequency sine wave signal and that is in the second measurement frame, and/or a 1st symbol that is located after the single-frequency sine wave signal and that is in the second measurement frame.

In a possible implementation, a single-frequency sine wave signal included in the second measurement frame includes at least two symbols, and each of the at least two symbols is obtained through Gaussian frequency-shift keying GFSK modulation based on a second bit.

A fourth symbol is obtained through GFSK modulation based on the second bit.

The fourth symbol includes a symbol that is located before and adjacent to the single-frequency sine wave signal and that is in the second measurement frame, and/or a 1st symbol that is located after the single-frequency sine wave signal and that is in the second measurement frame.

In a possible implementation, the method further includes:

The second device sends a ranging result, where the ranging result includes information about the distance between the first device and the second device.

In the communication apparatus 90 described in FIG. 9, a joint measurement result of the first frequency and a joint measurement result of the second frequency are not affected by a random initial phase caused by frequency switching of a device, and may be coherently combined, so that when the ranging result is calculated, a bandwidth greater than a bandwidth of a measurement frame of a single frequency can be used to calculate the ranging result, a more accurate ranging result can be obtained, and ranging accuracy is improved.

For a case in which the communication apparatus may be a chip or a chip system, refer to a diagram of a structure of a chip shown in FIG. 10.

As shown in FIG. 10, a chip 100 includes a processor 1001 and an interface 1002. There may be one or more processors 1001, and there may be a plurality of interfaces 1002. It should be noted that a function corresponding to each of the processor 1001 and the interface 1002 may be implemented by using a hardware design, or may be implemented by using a software design, or may be implemented by combining software and hardware. This is not limited herein.

Optionally, the chip 100 may further include a memory 1003, and the memory 1003 is configured to store necessary program instructions and necessary data.

In this application, the processor 1001 may be configured to: invoke, from the memory 1003, an implementation program of the communication method provided in one or more embodiments of this application for one or more devices or network elements of the first device, the second device, the third device, the fourth device, or the G node, and execute instructions included in the program. The interface 1002 may be configured to output an execution result of the processor 1001. In this application, the interface 1002 may be specifically configured to output each message or information of the processor 1001.

For the communication method provided in one or more embodiments of this application, refer to embodiments shown in FIG. 3, FIG. 4, and FIG. 5. Details are not described herein again.

The processor in embodiments of this application may be a central processing unit (Central Processing Unit, CPU), or the processor may be another general-purpose processor, a digital signal processor (digital signal processor, DSP), an application specific-integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 3, FIG. 4, and FIG. 5 may be implemented.

According to the methods provided in embodiments of this application, an embodiment of this application further provides a computer program product. The computer program product includes a computer program. When the computer program is run on a processor, the methods shown in FIG. 3, FIG. 4, and FIG. 5 may be implemented.

An embodiment of this application provides a vehicle-end device. The vehicle-end device includes at least one of the communication apparatus 80, the communication apparatus 90, or the chip 100.

An embodiment of this application further provides a system. The system includes a vehicle-end device and at least one of the communication apparatus 80, the communication apparatus 90, or the chip 100, and is configured to perform steps performed by a corresponding device in any one of embodiments in FIG. 3, FIG. 4, and FIG. 5.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processing circuit (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The unit, or each of the units may exist alone physically, or two or more units may be integrated into one unit. computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and other steps except sending and receiving may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A ranging method, comprising:

   sending, by a first device, a first measurement frame to a second device on a first frequency, and receiving, on the first frequency, a second measurement frame sent by the second device;
   sending, by the first device, a third measurement frame to the second device on a second frequency, and receiving, on the second frequency, a fourth measurement frame sent by the second device, wherein the second frequency is different from the first frequency;
   obtaining, by the first device, a first measurement result based on the second measurement frame;
   obtaining, by the first device, a third measurement result based on the fourth measurement frame; and
   sending, by the first device, the first measurement result and the third measurement result to a third device, wherein the first measurement result and the third measurement result are used for ranging.

2. The method according to claim 1, wherein the first frequency and the second frequency are adjacent frequencies in a time order of use, the first frequency belongs to a first frequency set, the second frequency belongs to a second frequency set, and the first frequency set comprises the first frequency and the second frequency set.

3. The method according to claim 1 or 2, wherein the method further comprises:

   determining, by the first device, the first frequency in the first frequency set in a pseudo-random manner based on a first random seed; and
   determining, by the first device, the second frequency in the second frequency set in a pseudo-random manner based on a second random seed.

4. The method according to claim 3, wherein the method further comprises:

   generating and sending, by the first device, the first random seed and/or the second random seed; or
   receiving, by the first device, the first random seed and/or the second random seed.

5. The method according to any one of claims 1 to 4, wherein the first measurement result comprises phase information or in-phase component and quadrature component IQ information of a single-frequency sine wave signal comprised in the second measurement frame at a first moment, or phase information or IQ information, at the first moment, of a signal obtained by extending the single-frequency sine wave signal comprised in the second measurement frame according to a single-frequency sine wave model.

6. The method according to claim 5, wherein the method further comprises:

determining, by the first device, a first timing offset, wherein the first timing offset represents a timing offset of the first device relative to the second measurement frame; and

determining, by the first device, the first moment based on the first timing offset.

7. The method according to claim 6, wherein the first moment satisfies T1=t0+t1/2, wherein t0 represents a reference moment, t1 represents the first timing offset, and T1 represents the first moment.

8. The method according to claim 6 or 7, wherein the determining a first timing offset comprises:
determining, by the first device, the first timing offset by measuring a signal in the second measurement frame.

9. The method according to claim 7 or 8, wherein the method further comprises:

receiving, by the first device, a first message, and/or sending the first message, wherein the first message indicates the reference moment, or

the reference moment is a preconfigured or predefined moment.

10. The method according to claim 7 or 8, wherein the method further comprises:

receiving, by the first device, a second message, and/or sending the second message, wherein the second message indicates a reference value, or the reference value is a preconfigured or predefined value; and

determining the reference moment based on the reference value and a first frequency offset, wherein the first frequency offset represents a frequency offset of the first device relative to the second measurement frame.

11. The method according to any one of claims 1 to 10, wherein a single-frequency sine wave signal comprised in the first measurement frame comprises at least two symbols, each of the at least two symbols is obtained through modulation based on a first sequence by using a first constellation diagram, the first sequence is a sequence comprising N bits, and a value of N corresponds to a modulation scheme of the first constellation diagram.

12. The method according to claim 11, wherein a first symbol is obtained through modulation based on the first sequence by using the first constellation diagram; and

the first symbol comprises a symbol that is located before and adjacent to the single-frequency sine wave signal and that is in the first measurement frame, and/or a 1$^{st}$ symbol that is located after the single-frequency sine wave signal and that is in the first measurement frame.

13. The method according to any one of claims 1 to 10, wherein a single-frequency sine wave signal comprised in the first measurement frame comprises at least two symbols, and each of the at least two symbols is obtained through Gaussian frequency-shift keying GFSK modulation based on a first bit; and

a second symbol is obtained through GFSK modulation based on the first bit, and the second symbol comprises a symbol that is located before and adjacent to the single-frequency sine wave signal and that is in the first measurement frame, and/or a 1$^{st}$ symbol that is located after the single-frequency sine wave signal and that is in the first measurement frame.

14. The method according to any one of claims 1 to 13, wherein the method further comprises:
receiving, by the first device, a ranging result, wherein the ranging result comprises information about a distance between the first device and the second device.

15. A ranging method, comprising:

receiving, by a second device, a first measurement frame sent by a first device on a first frequency, and sending a second measurement frame to the first device on the first frequency;

receiving, by the second device on a second frequency, a third measurement frame sent by the first device, and sending a fourth measurement frame to the first device on the second frequency, wherein the second frequency is different from the first frequency;

obtaining, by the second device, a second measurement result based on the first measurement frame;

obtaining, by the second device, a fourth measurement result based on the third measurement frame;

receiving, by the second device, a first measurement result and a third measurement result from a fourth device, wherein the first measurement result is a measurement result of the first device on the second measurement frame, and the third measurement result is a measurement result of the first device on the fourth measurement frame; and

determining, by the second device, a distance between the first device and the second device based on the first measurement result, the second measurement result, the third measurement result, and the fourth measurement result.

16. The method according to claim 15, wherein the first frequency and the second frequency are adjacent frequencies in a time order of use, the first frequency belongs to a first frequency set, the second frequency belongs to a second frequency set, and the first frequency set comprises the first frequency and the second frequency set.

17. The method according to claim 15 or 16, wherein the method further comprises:

determining, by the second device, the first frequency in the first frequency set in a pseudo-random manner based on a first random seed; and
determining, by the second device, the second frequency in the second frequency set in a pseudo-random manner based on a second random seed.

18. The method according to claim 17, wherein the method further comprises:

generating and sending, by the second device, the first random seed and/or the second random seed; or
receiving, by the second device, the first random seed and/or the second random seed.

19. The method according to any one of claims 15 to 18, wherein the method further comprises:
obtaining, by the second device, the second measurement result based on the first measurement frame, wherein the second measurement result comprises phase information or in-phase component and quadrature component IQ information of a single-frequency sine wave signal comprised in the first measurement frame at a second moment, or phase information or IQ information, at the second moment, of a signal obtained by extending a single-frequency sine wave signal comprised in the first measurement frame according to a single-frequency sine wave model, and the second measurement result is used for ranging.

20. The method according to claim 19, wherein the method further comprises:

determining, by the second device, a second timing offset, wherein the second timing offset represents a timing offset of the second device relative to the first measurement frame; and
determining, by the second device, the second moment based on the second timing offset.

21. The method according to claim 20, wherein the second moment satisfies T2=t0+t2/2, wherein t0 represents a reference moment, t2 represents the second timing offset, and T2 represents the second moment.

22. The method according to claim 20 or 21, wherein the determining a second timing offset comprises:
determining, by the second device, the second timing offset by measuring a signal in the first measurement frame.

23. The method according to claim 21 or 22, wherein the method further comprises:

sending, by the second device, a first message, and/or receiving the first message, wherein the first message indicates the reference moment, or
the reference moment is a preconfigured or predefined moment.

24. The method according to claim 21 or 22, wherein the method further comprises:

sending, by the second device, a second message, and/or receiving the second message, wherein the second message indicates a reference value, or the reference value is a preconfigured or predefined value; and
determining the reference moment based on the reference value and a second frequency offset, wherein the second frequency offset represents a frequency offset of the second device relative to the first measurement frame.

25. The method according to any one of claims 15 to 24, wherein a single-frequency sine wave signal comprised in the second measurement frame comprises at least two symbols, each of the at least two symbols is obtained through modulation based on a second sequence by using a second constellation diagram, the second sequence is a sequence comprising M bits, and a value of M corresponds to a modulation scheme of the second constellation diagram.

26. The method according to claim 25, wherein a third symbol is obtained through modulation based on the second sequence by using the second constellation diagram; and
the third symbol comprises a symbol that is located before and adjacent to the single-frequency sine wave signal and that is in the second measurement frame, and/or a 1st symbol that is located after the single-frequency sine wave signal and that is in the second measurement frame.

27. The method according to any one of claims 15 to 24, wherein a single-frequency sine wave signal comprised in the second measurement frame comprises at least two symbols, and each of the at least two symbols is obtained through Gaussian frequency-shift keying GFSK modulation based on a second bit;

a fourth symbol is obtained through GFSK modulation based on the second bit; and
the fourth symbol comprises a symbol that is located before and adjacent to the single-frequency sine wave signal and that is in the second measurement frame, and/or a 1st symbol that is located after the single-frequency sine wave signal and that is in the second measurement frame.

28. The method according to any one of claims 15 to 27, wherein the method further comprises:
sending, by the second device, a ranging result, wherein the ranging result comprises information about the distance between the first device and the second device.

29. A communication apparatus, comprising a module or a unit configured to perform the method according to any one of claims 1 to 14 or any one of claims 15 to 28.

30. A communication apparatus, comprising: a processor, wherein
when the processor invokes a computer program or instructions in a memory, the method according to any one of claims 1 to 14 is performed, or the method according to any one of claims 15 to 28 is performed.

31. A communication apparatus, comprising a logic circuit and a communication interface, wherein

the communication interface is configured to receive information or send information, and
the logic circuit is configured to receive the information or send the information through the communication interface, so that the method according to any one of claims 1 to 14 is performed, or the method according to any one of claims 15 to 28 is performed.

32. A computer-readable storage medium, wherein
the computer-readable storage medium is configured to store instructions or a computer program; and when the instructions or the computer program is executed, the method according to any one of claims 1 to 14 is implemented, or the method according to any one of claims 15 to 28 is implemented.

33. A computer program product, comprising instructions or a computer program, wherein
when the instructions or the computer program is executed, the method according to any one of claims 1 to 14 is implemented, or the method according to any one of claims 15 to 28 is implemented.

34. A terminal device, comprising the communication apparatus according to claim 29, the communication apparatus according to claim 30, or the communication apparatus according to claim 31.

35. A system, comprising a vehicle and the communication apparatus according to claim 29, or the communication apparatus according to claim 30, or the communication apparatus according to claim 31.

FIG. 1

FIG. 2

| First device | Second device | Third device |

S301: First measurement frame →

S302: Second measurement frame ←

S303: Third measurement frame →

S304: Fourth measurement frame ←

S305: Obtain a first measurement result based on the second measurement frame

S306: Obtain a third measurement result based on the fourth measurement frame

S307: First measurement result and third measurement result →

FIG. 3

| Fourth device | First device | | Second device |
|---|---|---|---|

S401: First measurement frame →

S402: Second measurement frame ←

S403: Third measurement frame →

S404: Fourth measurement frame ←

S405: Obtain a second measurement result based on the first measurement frame

S406: Obtain a fourth measurement result based on the third measurement frame

S407: First measurement result and third measurement result →

S408: Determine a distance between the first device and the second device based on the first measurement result, the second measurement result, the third measurement result, and the fourth measurement result

FIG. 4

FIG. 5

Synchronization
sequence

| Slot count | → | **Pseudo-random number generator** | → Random number | **Remapping** | → | **Available frequency hopping list** | → | Output a frequency-hopping frequency |

Pseudo-random number generation process

Available frequency mapping process

FIG. 6

$t_1$

Reference moment $t_0$    First moment

Moment $t'_2$ at which a first device receives the second measurement frame First device clock $t^1$

$t_2$

Frequency $f^1$

0.5 x t1

Transmit a first measurement frame

Transmit a second measurement frame

$t_1$

Reference moment $t_0$    Second moment

$t_2$

Second device clock $t^2$

Frequency $f^2$

Moment $t'_1$ at which a second device receives the first measurement frame

0.5 x t2

Timing offset $dt_1$ between devices

Propagation delay t

Timing offset $dt_0$ between the devices

First timing offset t1

Timing offset $dt_2$ between the devices

$t_1^2$   $t_1^1$    $t'_1^2$

$t_0^2$   $t_0^1$

$t_2^2$   $t_2^1$    $t'_2^1$

Ideal clock

Frequency f

Second timing offset t2

Propagation delay t

FIG. 7

Communication apparatus 80

801

Transceiver unit

802

Processing unit

FIG. 8

Communication apparatus 90

901

Communication interface

902

Processor

FIG. 9

Chip 100

Memory 1003

Processor 1001

Interface 1002

FIG. 10

## INTERNATIONAL SEARCH REPORT

| International application No. |
|---|
| **PCT/CN2022/095359** |

| A. | CLASSIFICATION OF SUBJECT MATTER |
|---|---|
| | G01S11/02(2010.01)i |

According to International Patent Classification (IPC) or to both national classification and IPC

| B. | FIELDS SEARCHED |
|---|---|

Minimum documentation searched (classification system followed by classification symbols)

G01S,H04W,G01C

Documentation searched other than minimum documentation to the extent that such documents are included in the fields searched

Electronic data base consulted during the international search (name of data base and, where practicable, search terms used)

CNTXT, ENTXTC, ENTXT, VEN: 测距, 双边, 双向, 频点, 跳频, 第一, 1st, 第二, 2nd, 多个, 定时, 时钟, 偏差, 偏移, ranging, two way, double side, frequency, hopping, first, second, multi+, timing, clock, deviation, offset, jitter, skew

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022000354 A1 (GUANGDONG OPPO MOBILE TELECOMMUNICATIONS CORP., LTD.) 06 January 2022 (2022-01-06) description, pages 2-9 | 1-35 |
| Y | CN 112051561 A (ALIBABA GROUP HOLDING LIMITED) 08 December 2020 (2020-12-08) description, paragraphs [0125]-[0284] | 1-35 |
| Y | CN 113551670 A (ZHIWEI SPACE INTELLIGENT TECHNOLOGY (SUZHOU) CO., LTD.) 26 October 2021 (2021-10-26) description, paragraphs [0031]-[0070] | 1-35 |
| Y | CN 114063049 A (YAN HAIBO) 18 February 2022 (2022-02-18) description, paragraphs [0125]-[0284] | 1-35 |
| A | US 2019182793 A1 (TELEFONAKTIEBOLAGET LM ERICSSON (PUBL)) 13 June 2019 (2019-06-13) entire document | 1-35 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **31 January 2023** | **14 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/095359** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022057416 A1 (GUANGDONG OPPO MOBILE TELECOMMUNICATIONS CORP., LTD.) 24 March 2022 (2022-03-24)<br>    entire document | 1-35 |

Form PCT/ISA/210 (second sheet) (July 2022)

**INTERNATIONAL SEARCH REPORT**
Information on patent family members

International application No.

**PCT/CN2022/095359**

| Patent document cited in search report | | | Publication date (day/month/year) | Patent family member(s) | | | Publication date (day/month/year) |
|---|---|---|---|---|---|---|---|
| WO | 2022000354 | A1 | 06 January 2022 | None | | | |
| CN | 112051561 | A | 08 December 2020 | None | | | |
| CN | 113551670 | A | 26 October 2021 | None | | | |
| CN | 114063049 | A | 18 February 2022 | None | | | |
| US | 2019182793 | A1 | 13 June 2019 | JP | 2019533802 | A | 21 November 2019 |
| | | | | WO | 2018026317 | A1 | 08 February 2018 |
| | | | | US | 2020314792 | A1 | 01 October 2020 |
| | | | | EP | 3491866 | A1 | 05 June 2019 |
| | | | | AR | 109217 | A1 | 07 November 2018 |
| | | | | BR | 112019001617 | A2 | 30 April 2019 |
| | | | | JP | 6802356 | B2 | 16 December 2020 |
| | | | | US | 11129126 | B2 | 21 September 2021 |
| | | | | US | 10805898 | B2 | 13 October 2020 |
| | | | | EP | 3491866 | A4 | 31 July 2019 |
| | | | | EP | 3491866 | B1 | 07 October 2020 |
| WO | 2022057416 | A1 | 24 March 2022 | None | | | |

Form PCT/ISA/210 (patent family annex) (July 2022)